(19) Europäisches Patentamt
European Patent Office
Office européen des brevets

(11) EP 3 312 240 B1

(12) EUROPEAN PATENT SPECIFICATION

(45) Date of publication and mention of the grant of the patent:
**02.07.2025 Bulletin 2025/27**

(21) Application number: **16811391.8**

(22) Date of filing: **24.05.2016**

(51) International Patent Classification (IPC):
***C08L 69/00*** (2006.01) ***C08G 64/18*** (2006.01)
***C08K 3/00*** (2018.01) ***C08K 5/42*** (2006.01)
***C08K 5/521*** (2006.01) ***C08K 7/14*** (2006.01)
***C08L 25/04*** (2006.01) ***C08L 27/18*** (2006.01)
***C08L 55/02*** (2006.01)

(52) Cooperative Patent Classification (CPC):
(C-Sets available)
**C08G 64/186; C08G 64/18; C08K 3/00; C08K 5/42; C08K 5/521; C08K 7/14; C08L 25/04; C08L 27/18; C08L 55/02; C08L 69/00** (Cont.)

(86) International application number:
**PCT/JP2016/065348**

(87) International publication number:
**WO 2016/203916 (22.12.2016 Gazette 2016/51)**

# (54) PREPARATION METHOD FOR POLYCARBONATE RESIN COMPOSITION

HERSTELLUNGSVERFAHREN FÜR POLYCARBONATHARZZUSAMMENSETZUNG

PROCÉDÉ DE PRÉPARATION DE COMPOSITION DE RÉSINE DE POLYCARBONATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.06.2015 JP 2015122368**

(43) Date of publication of application:
**25.04.2018 Bulletin 2018/17**

(73) Proprietor: **Idemitsu Kosan Co.,Ltd.**
**Chiyoda-ku**
**Tokyo**
**100-8321 (JP)**

(72) Inventors:
- **YAMADA, Aki**
**Ichihara-shi**
**Chiba 299-0193 (JP)**
- **ISHIKAWA, Yasuhiro**
**Ichihara-shi**
**Chiba 299-0193 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 331 246**
**EP-A1- 2 511 321**
**EP-A1- 3 081 584**
**WO-A1-2011/007673**
**WO-A1-2013/051557**
**WO-A1-2015/087595**
**JP-A- 2006 523 243**
**JP-A- 2012 236 926**
**JP-A- 2013 523 938**
**JP-A- 2014 172 938**
**JP-A- 2015 193 771**
**US-A1- 2003 027 928**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 69/00, C08L 83/10, C08K 7/14;**
**C08L 83/10, C08L 55/02;**
**C08L 83/10, C08L 69/00, C08K 5/0066,**
**C08L 27/12;**
**C08L 83/10, C08L 69/00, C08K 7/14**

## Description

TECHNICAL FIELD

The present invention relates to a method of producing a polycarbonate-based resin composition that uses a resin excellent in transparency as a raw material and has impact resistance.

BACKGROUND ART

A polycarbonate resin (hereinafter sometimes abbreviated as "PC resin") has been attracting attention because of its excellent properties, such as high impact resistance, chemical resistance, and flame retardancy. Accordingly, the polycarbonate resin has been expected to be widely utilized in various fields, such as the field of electrical equipment, the field of electronic equipment, and the field of automobiles. In particular, the utilization of the polycarbonate resin in housings for a cellular phone, a mobile personal computer, a digital camera, a video camera, an electric tool, and the like, and in other commodities has been expanding.

In normal cases, a homopolycarbonate using 2,2-bis(4-hydroxyphenyl)propane [common name: bisphenol A, sometimes abbreviated as "BPA"] as a dihydric phenol serving as a raw material has been generally used as a typical polycarbonate resin. A polycarbonate-polyorganosiloxane copolymer (hereinafter sometimes abbreviated as "PC-POS") serving as a polycarbonate-based resin composition using a polyorganosiloxane as a copolymerizable monomer has been known for improving the physical properties of the homopolycarbonate, such as flame retardancy and impact resistance (see Patent Documents 1 to 3).

When the impact resistance of the polycarbonate-based resin composition, in particular, its impact resistance under low temperature is improved, as disclosed in Patent Document 3, a method involving using a polyorganosiloxane having a long chain length has been known. However, the method has involved a problem in that the transparency of the composition reduces.

On the other hand, a method involving using a polyorganosiloxane having a relatively short chain length has been known for improving the transparency of the polycarbonate-based resin composition (see Patent Documents 4 and 5). However, the method has involved a problem in that the impact resistance of the composition reduces.

The following attempt has been made in Patent Document 6. Two kinds of polycarbonate-polyorganosiloxane copolymers having different light transmittances are blended to improve transparency while maintaining excellent impact resistance. However, the transparency cannot be said to be sufficient.

As described above, it has been difficult to achieve compatibility between excellent transparency and excellent impact resistance, in particular, impact resistance under low temperature in a hitherto known polycarbonate-based resin composition.

When a PC resin having high transparency is mixed with a PC resin having low transparency in a line for the production of a polycarbonate-based resin, the transparency of the PC resin to be finally obtained largely reduces. Therefore, when the PC resin having high transparency is produced in the same line after the PC resin having low transparency has been produced, a long transition period needs to be secured at the time of switching between the products for suppressing the reduction in transparency of the PC resin to be finally obtained, and the need causes a problem in that productivity remarkably reduces.

Patent Document 7 discloses a PC-POS copolymer, a process for production of the copolymer, and a PC resin containing the copolymer.

Patent Document 8 discloses a housing for a portable electronic appliance, which is obtained by molding a PC resin composition comprising a PC-POS copolymer and an aromatic PC (A-2).

Patent Document 9 discloses a PC resin composition.

Patent Document 10 discloses a PC resin composition.

Patent Document 11 discloses a PC-POS copolymer and a method for producing the same.

CITATION LIST

PATENT DOCUMENT

Patent Document 1: JP 2662310 B2
Patent Document 2: JP 2011-21127 A
Patent Document 3: JP 2012-246430 A
Patent Document 4: JP 08-81620 A

Patent Document 5: JP 2011-46911 A
Patent Document 6: JP 2006-523243 A
Patent Document 7: EP 2 511 321 A1
Patent Document 8: WO 2011/007673 A1
Patent Document 9: US 2003/0027928 A1
Patent Document 10: EP 1 331 246 A1
Patent Document 11: EP 3 081 584 A1

SUMMARY OF INVENTION

TECHNICAL PROBLEM

An object of the present invention is to produce a polycarbonate-based resin composition having excellent impact resistance and a molded body thereof while shortening a transition period involved in switching between products.

SOLUTION TO PROBLEM

The inventors of the present invention have found that the object is achieved by using a specific PC resin as a raw material and adding a predetermined amount of a predetermined additive to the PC resin.

That is, the present invention relates to a method for producing a polycarbonate-based resin composition as defined in the appended claims.

ADVANTAGEOUS EFFECTS OF INVENTION

According to the present invention, the polycarbonate-based resin composition having excellent impact resistance and the molded body thereof can be provided while shortening the transition period involved in switching between products by using a specific PC resin and adding a predetermined amount of a predetermined additive to the PC resin.

BRIEF DESCRIPTION OF DRAWINGS

Figure 1 is a graph for showing an example of a differential molecular weight distribution curve to be obtained, the figure being for showing a value obtained by integrating dw/dlog(M) over the range of $4.00 \leq \log(M) \leq 4.50$ in a shaded area.

DESCRIPTION OF EMBODIMENTS

A polycarbonate-based resin composition of the present invention is described in detail below. In this description, a specification considered to be preferred can be arbitrarily adopted, and a combination of preferred specifications can be said to be more preferred. In addition, the term "XX to YY" as used herein means "from XX or more to YY or less."

A method of producing a polycarbonate-based resin composition according to the present invention comprises using a polycarbonate-based resin containing a polycarbonate-polyorganosiloxane copolymer (A) as a raw material, and

the step of incorporating at least one of a styrene-based resin (B), a flame retardant (C), a flame retardant aid (D), and an inorganic filler (E) into the resin, wherein

the copolymer having a polycarbonate block (A-1) formed of a repeating unit represented by the following general formula (I) and a polyorganosiloxane block (A-2) containing a repeating unit represented by the following general formula (II), and

the copolymer using, as a raw material, a polyorganosiloxane which is obtained by blending a plurality of polyorganosiloxanes, the blend having the following features: in a differential molecular weight distribution curve obtained from measurement by gel permeation chromatography using the polystyrene calibration curve, the curve having the axis of abscissa indicating a logarithmic value log (M) of a molecular weight M and the axis of ordinate indicating dw/dlog(M) obtained by differentiating a concentration fraction w with respect to the logarithmic value log(M) of the molecular weight,

(1) a dw/dlog(M) value becomes maximum in the range of $3.4 \leq \log(M) \leq 4.0$, and
(2) a ratio of a value obtained by integrating the dw/dlog (M) value over the range of $4.00 \leq \log(M) \leq 4.50$ to a value obtained by integrating the dw/dlog (M) value over the entire range of the log (M) in the differential molecular weight distribution curve is 6 to 40%:

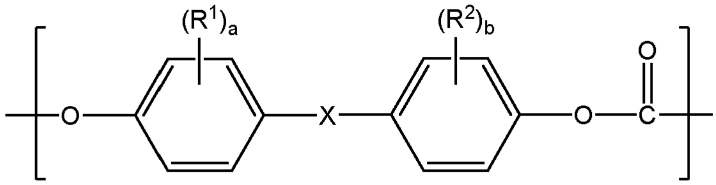

(I)

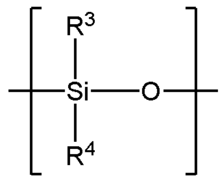

(II)

wherein $R^1$ and $R^2$ each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, $-SO_2-$, -O-, or -CO-, $R^3$ and $R^4$ each independently represent a hydrogen atom, a halogen atom, an alkyl group having 1 to 6 carbon atoms, an alkoxy group having 1 to 6 carbon atoms, or an aryl group having 6 to 12 carbon atoms, and a and b each independently represent an integer of 0 to 4,

wherein the flame retardant (C) comprises at least one selected from an organic alkali metal salt, an organic alkaline earth metal salt, a silicone-based flame retardant, and a phosphorus-based flame retardant.

In a specific method of producing the polycarbonate-polyorganosiloxane copolymer, the copolymer is produced by the step of polymerizing: a polyorganosiloxane (C-1) represented by the following general formula (ii) or (iii), and having an average chain length n of 20 or more to less than 60; a polyorganosiloxane (C-2) represented by the following general formula (ii) or (iii), and having an average chain length n of 60 or more to 500 or less; a polycarbonate precursor; and a dihydric phenol:

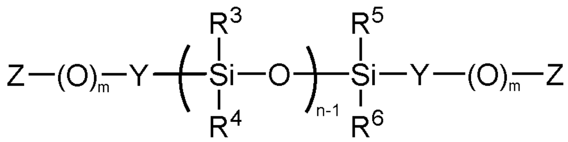

(ii)

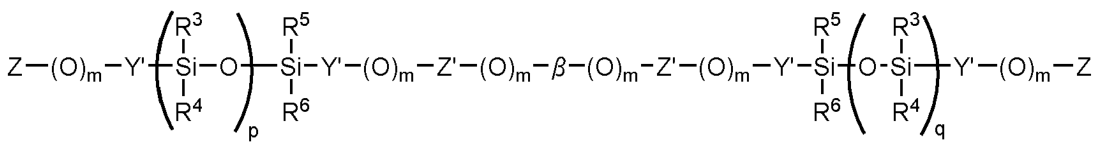

(iii)

wherein

in the formulae (ii) and (iii), $R^3$ to $R^6$ each independently represent a hydrogen atom, a halogen atom, an alkyl group having 1 to 6 carbon atoms, an alkoxy group having 1 to 6 carbon atoms, or an aryl group having 6 to 12 carbon atoms, Y and Y' each independently represent a single bond, -C(=O)- or an organic residue containing an aliphatic or an aromatic group, the organic residue being bonded to Si and O or to Si and Z, m represents 0 or 1, Z each independently represent a halogen atom, $-R^7OH$, $-R^7COOH$, $-R^7NH_2$, $-R^7NHR^8$, -COOH, or -SH, $R^7$ represents a linear, branched, or cyclic alkylene group, an aryl-substituted alkylene group, an aryl-substituted alkylene group that may have an alkoxy group on a ring thereof, an arylene group that may be substituted, or an arylene alkyl-substituted aryl group, $R^8$ represents an alkyl group, an alkenyl group, an aryl group, or an aralkyl group, Z's each independently represent $-R^7O-$, $-R^7COO-$, $-R^7NH-$, -COO-, or -S-, β represents a divalent group derived from a diisocyanate compound or a divalent group derived from a dicarboxylic acid, n represents the average chain length of a polyorganosiloxane moiety, and n-1 represents an average number of repetitions, and p and q each represent an average number of repetitions and each represent an integer of 1 or more, and the sum of p and q is n-2.

The polycarbonate-polyorganosiloxane copolymer has excellent transparency and excellent impact resistance, in particular, excellent impact resistance under low temperature. According to the present invention in which the

polycarbonate-polyorganosiloxane copolymer having such characteristics is used, even when switching between products is performed by using one and the same line, the transparency of any such product is not reduced. Accordingly, a transition period is shortened and hence a reduction in productivity can be suppressed.

With regard to the transparency of the polycarbonate-polyorganosiloxane copolymer, its total light transmittance (Tt) is preferably 80% or more, more preferably 82% or more, still more preferably 84% or more.

<Polycarbonate-based Resin>

In the polycarbonate-based resin composition of the present invention, 0 to 70 mass% of the styrene-based resin (B) is preferably incorporated into 100 to 30 mass% of the polycarbonate-based resin containing the polycarbonate-polyorganosiloxane copolymer (A). The polycarbonate-polyorganosiloxane copolymer (A) has a polycarbonate block (A-1) formed of a repeating unit represented by the following general formula (I) and a polyorganosiloxane block (A-2) containing a repeating unit represented by the following general formula (II).

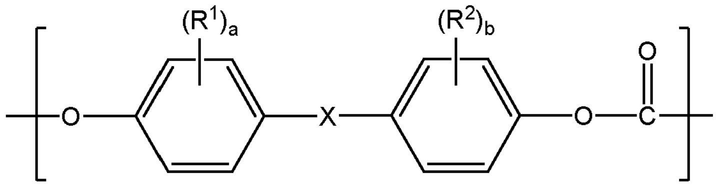

(I)

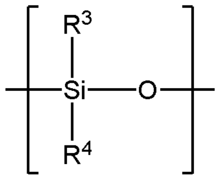

(II)

Examples of the halogen atom that $R^1$ and $R^2$ in the general formula (I) each independently represent include a fluorine atom, a chlorine atom, a bromine atom, and an iodine atom.

Examples of the alkyl group that $R^1$ and $R^2$ each independently represent include a methyl group, an ethyl group, a n-propyl group, an isopropyl group, various butyl groups ("various" means that a linear group and any branched group are included, and the same applies hereinafter), various pentyl groups, and various hexyl groups. An example of the alkoxy group that $R^1$ and $R^2$ each independently represent is an alkoxy group whose alkyl group moiety is the alkyl group described above.

The alkylene group represented by X is, for example, a methylene group, an ethylene group, a trimethylene group, a tetramethylene group, or a hexamethylene group, and is preferably an alkylene group having 1 to 5 carbon atoms. Examples of the alkylidene group represented by X include an ethylidene group and an isopropylidene group. The cycloalkylene group represented by X is, for example, a cyclopentanediyl group, a cyclohexanediyl group, or a cyclooctanediyl group, and is preferably a cycloalkylene group having 5 to 10 carbon atoms. The cycloalkylidene group represented by X is, for example, a cyclohexylidene group, a 3,5, 5-trimethylcyclohexylidene group, or a 2-adamantylidene group, and is preferably a cycloalkylidene group having 5 to 10 carbon atoms, more preferably a cycloalkylidene group having 5 to 8 carbon atoms. As an aryl moiety of the arylalkylene group represented by X, there are given, for example, aryl groups each having 6 to 14 ring-forming carbons, such as a phenyl group, a naphthyl group, a biphenyl group, and an anthryl group. As an aryl moiety of the arylalkylidene group represented by X, there are given, for example, aryl groups each having 6 to 14 ring-forming carbons, such as a phenyl group, a naphthyl group, a biphenyl group, and an anthryl group.

a and b each independently represent an integer of 0 to 4, preferably 0 to 2, more preferably 0 or 1.

Among them, the following is suitable: a repeating unit in which a and b each represent 0, and X represents a single bond or an alkylidene group having 2 to 8 carbon atoms, or a repeating unit in which a and b each represent 0, and X represents an alkylidene group having 3 carbon atoms, particularly an isopropylidene group.

Examples of the halogen atom represented by $R^3$ or $R^4$ in the general formula (II) include a fluorine atom, a chlorine atom, a bromine atom, and an iodine atom. Examples of the alkyl group represented by $R^3$ or $R^4$ include a methyl group, an ethyl group, a n-propyl group, an isopropyl group, various butyl groups, various pentyl groups, and various hexyl groups. An example of the alkoxy group represented by $R^3$ or $R^4$ is an alkoxy group whose alkyl group moiety is the alkyl group described above. Examples of the aryl group represented by $R^3$ or $R^4$ include a phenyl group and a naphthyl group.

$R^3$ and $R^4$ each preferably represent a hydrogen atom, an alkyl group having 1 to 6 carbon atoms, an alkoxy group having 1 to 6 carbon atoms, or an aryl group having 6 to 12 carbon atoms, and each more preferably represent a methyl

group.

The content of the polyorganosiloxane block (A-2) containing a repeating unit represented by the general formula (II) in the PC-POS copolymer (A) to be used in the present invention is preferably 0.5 to 20.0 mass%, more preferably 1.5 to 15.0 mass% of the polycarbonate-based resin containing the polycarbonate-polyorganosiloxane copolymer (A). When the content of the polyorganosiloxane block (A-2) is 0.5 mass% or more, sufficient low-temperature impact resistance is obtained, and when the content is 20.0 mass% or less, sufficient heat resistance is obtained.

The polyorganosiloxane block (A-2) containing a repeating unit represented by the general formula (II) in the PC-POS copolymer (A) to be used in the present invention is preferably represented by any one of the following general formulae (II-I) to (II-III):

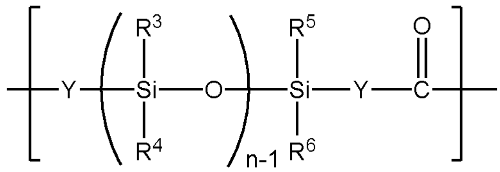

(II-I)

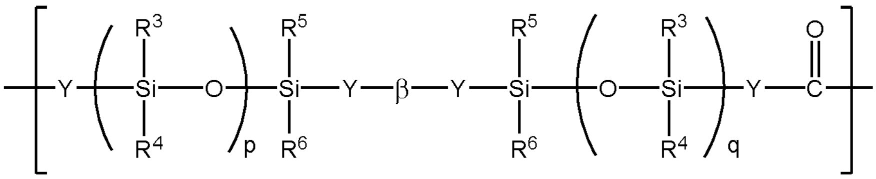

(II-II)

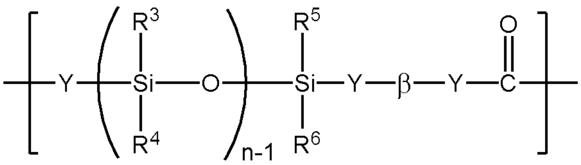

(II-III)

wherein $R^3$ to $R^6$ each independently represent a hydrogen atom, a halogen atom, an alkyl group having 1 to 6 carbon atoms, an alkoxy group having 1 to 6 carbon atoms, or an aryl group having 6 to 12 carbon atoms, and a plurality of $R^3$, $R^4$, $R^5$, or $R^6$ may be identical to or different from each other, Y represents $-R^7O-$, $-R^7COO-$, $-R^7NH-$, $-R^7NR^8-$, -COO-, -S-, $-R^7COO-R^9-O-$, or $-R^7O-R^{10}-O-$, and a plurality of Ymaybe identical to or different from each other, the $R^7$ represents a single bond, a linear, branched, or cyclic alkylene group, an aryl-substituted alkylene group, a substituted or unsubstituted arylene group, or a diarylene group, $R^8$ represents an alkyl group, an alkenyl group, an aryl group, or an aralkyl group, $R^9$ represents a diarylene group, $R^{10}$ represents a linear, branched, or cyclic alkylene group, or a diarylene group, β represents a divalent group derived from a diisocyanate compound, or a divalent group derived from a dicarboxylic acid or a halide of a dicarboxylic acid, p and q each represent an integer of 1 or more, and the sum of p and q is n-2, and n represents an average chain length of the polyorganosiloxane.

Examples of the halogen atom that $R^3$ to $R^6$ each independently represent include a fluorine atom, a chlorine atom, a bromine atom, and an iodine atom. Examples of the alkyl group that $R^3$ to $R^6$ each independently represent include a methyl group, an ethyl group, a n-propyl group, an isopropyl group, various butyl groups, various pentyl groups, and various hexyl groups. An example of the alkoxy group that $R^3$ to $R^6$ each independently represent is an alkoxy group whose alkyl group moiety is the alkyl group described above. Examples of the aryl group that $R^3$ to $R^6$ each independently represent include a phenyl group and a naphthyl group.

$R^3$ to $R^6$ each preferably represent a hydrogen atom, an alkyl group having 1 to 6 carbon atoms, an alkoxy group having 1 to 6 carbon atoms, or an aryl group having 6 to 12 carbon atoms.

$R^3$ to $R^6$ in the general formula (II-I), the general formula (II-II), and/or the general formula (II-III) each preferably represent a methyl group.

The linear or branched alkylene group represented by $R^7$ in $-R^7O-$, $-R^7COO-$, $-R^7NH-$, $-R^7NR^8-$, $-R^7COO-R^9-O-$, or $-R^7O-R^{10}-O-$represented by Y is, for example, an alkylene group having 1 to 8 carbon atoms, preferably 1 to 5 carbon atoms, and the cyclic alkylene group represented by $R^7$ is, for example, a cycloalkylene group having 5 to 15 carbon atoms, preferably 5 to 10 carbon atoms.

The average chain length n of the polyorganosiloxane block (A-2) in the PC-POS copolymer (A) to be used in the present invention is preferably 30 to 85, more preferably 40 to 75, still more preferably 45 to 65. The average chain length n is calculated by nuclear magnetic resonance (NMR) measurement. When the average chain length n is 30 or more, a resin composition and a molded body each having sufficient impact resistance at low temperature can be obtained. In addition,

when the average chain length n is 85 or less, a resin composition and a molded body each of which is excellent in molding external appearance can be obtained.

The polyorganosiloxane block (A-2) containing a repeating unit represented by the general formula (II) for forming the PC-POS copolymer (A) to be used in the present invention satisfies the following (1) and (2) in a differential molecular weight distribution curve obtained from measurement of the polyorganosiloxane block (A-2) by gel permeation chromatography using the polystyrene calibration curve, the curve having the axis of abscissa indicating a logarithmic value log(M) of a molecular weight M and the axis of ordinate indicating dw/dlog(M) obtained by differentiating a concentration fraction w with respect to the logarithmic value log (M) of the molecular weight,

(1) a dw/dlog(M) value becomes maximum in the range of $3.4 \leq \log(M) \leq 4.0$, and
(2) a ratio of a value obtained by integrating the dw/dlog (M) value over the range of $4.00 \leq \log(M) \leq 4.50$ to a value obtained by integrating the dw/dlog (M) value over the entire range of the log (M) in the differential molecular weight distribution curve is 6 to 40%.

<Polyorganosiloxane>

The polyorganosiloxane to be used in the present invention is obtained by blending a plurality of polyorganosiloxanes, the blend having the following features: in a differential molecular weight distribution curve obtained from measurement by gel permeation chromatography using the polystyrene calibration curve, the curve having the axis of abscissa indicating a logarithmic value log (M) of a molecular weight M and the axis of ordinate indicating dw/dlog(M) obtained by differentiating a concentration fraction w with respect to the logarithmic value log(M) of the molecular weight,

(1) a dw/dlog(M) value becomes maximum in the range of $3.4 \leq \log(M) \leq 4.0$, and
(2) a ratio of a value obtained by integrating the dw/dlog (M) value over the range of $4.00 \leq \log(M) \leq 4.50$ to a value obtained by integrating the dw/dlog (M) value over the entire range of the log (M) in the differential molecular weight distribution curve is 6 to 40%.

As a raw material of the polycarbonate-polyorganosiloxane copolymer (A) having the above features to be used in the present invention, a polyorganosiloxane represented by the following general formula (2), the following general formula (3), and/or the following general formula (4) can be used:

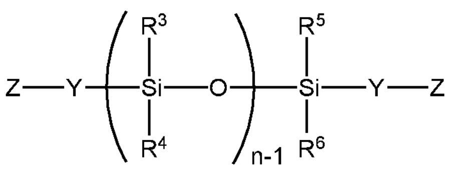

(2)

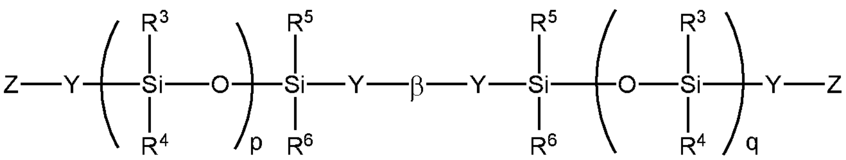

(3)

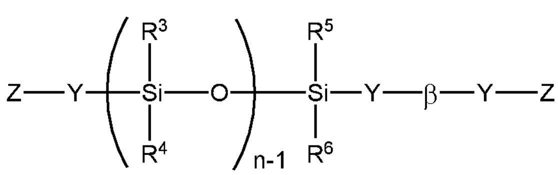

(4)

wherein $R^3$ to $R^6$ each independently represent a hydrogen atom, a halogen atom, an alkyl group having 1 to 6 carbon atoms, an alkoxy group having 1 to 6 carbon atoms, or an aryl group having 6 to 12 carbon atoms, and a plurality of $R^3$, $R^4$, $R^5$, or $R^6$ may be identical to or different from each other, Y represents $-R^7O-$, $-R^7COO-$, $-R^7NH-$, $-R^7NR^8-$, -COO-, -S-, $-R^7COO-R^9-O-$, or $-R^7O-R^{10}-O-$, and a plurality of Ymaybe identical to or different from each other, the $R^7$ represents a single bond, a linear, branched, or cyclic alkylene group, an aryl-substituted alkylene group, a substituted or unsubstituted arylene group, or a diarylene group, $R^8$ represents an alkyl group, an alkenyl group, an aryl group, or an aralkyl group, $R^9$ represents a diarylene group, $R^{10}$ represents a linear, branched, or cyclic alkylene group, or a diarylene group, Z represents a hydrogen atom or a halogen atom and a plurality of Z may be identical to or different from each other, β

represents a divalent group derived from a diisocyanate compound, or a divalent group derived from a dicarboxylic acid or a halide of a dicarboxylic acid, p and q each represent an integer of 1 or more, and the sum of p and q is n-2, and n represents an average chain length of the polyorganosiloxane.

Examples of the halogen atom that $R^3$ to $R^6$ each independently represent include a fluorine atom, a chlorine atom, a bromine atom, and an iodine atom. Examples of the alkyl group that $R^3$ to $R^6$ each independently represent include a methyl group, an ethyl group, a n-propyl group, an isopropyl group, various butyl groups, various pentyl groups, and various hexyl groups. An example of the alkoxy group that $R^3$ to $R^6$ each independently represent is an alkoxy group whose alkyl group moiety is the alkyl group described above. Examples of the aryl group that $R^3$ to $R^6$ each independently represent include a phenyl group and a naphthyl group.

$R^3$ to $R^6$ each preferably represent a hydrogen atom, an alkyl group having 1 to 6 carbon atoms, an alkoxy group having 1 to 6 carbon atoms, or an aryl group having 6 to 12 carbon atoms.

The polyorganosiloxane represented by the general formula (2), the general formula (3), and/or the general formula (4) is preferably a polyorganosiloxane in which $R^3$ to $R^6$ each represent a methyl group.

The linear or branched alkylene group represented by $R^7$ in $-R^7O-$, $-R^7COO-$, $-R^7NH-$, $-R^7NR^8-$, $-R^7COO-R^9-O-$, or $-R^7O-R^{10}-O-$represented by Y is, for example, an alkylene group having 1 to 8 carbon atoms, preferably 1 to 5 carbon atoms, and the cyclic alkylene group represented by $R^7$ is, for example, a cycloalkylene group having 5 to 15 carbon atoms, preferably 5 to 10 carbon atoms.

The aryl-substituted alkylene group represented by $R^7$ may have a substituent, such as an alkoxy group or an alkyl group, on its aromatic ring, and a specific structure thereof may be, for example, a structure represented by the following general formula (5) or (6), provided that when the block has the aryl-substituted alkylene group, the alkylene group is bonded to Si:

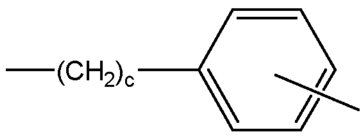

(5)

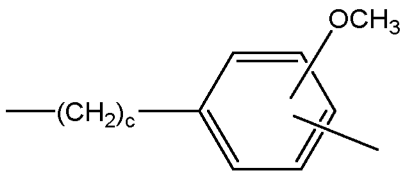

(6)

wherein c represents a positive integer and typically represents an integer of 1 to 6.

The diarylene group represented by any one of $R^7$, $R^9$, and $R^{10}$ is a group in which two arylene groups are linked to each other directly or through a divalent organic group, and is specifically a group having a structure represented by $-Ar^1-W-Ar^2-$. $Ar^1$ and $Ar^2$ each represent an arylene group, and W represents a single bond or a divalent organic group. Examples of the divalent organic group represented by W include an isopropylidene group, a methylene group, a dimethylene group, and a trimethylene group.

Examples of the arylene group represented by any one of $R^7$, $Ar^1$, and $Ar^2$ include arylene groups each having 6 to 14 ring-forming carbons, such as a phenylene group, a naphthylene group, a biphenylene group, and an anthrylene group. Those arylene groups may each have an arbitrary substituent, such as an alkoxy group or an alkyl group.

The alkyl group represented by $R^8$ is a linear or branched group having 1 to 8, preferably 1 to 5 carbon atoms. The alkenyl group represented by $R^8$ is, for example, a linear or branched group having 2 to 8, preferably 2 to 5 carbon atoms. The aryl group represented by $R^8$ is, for example, a phenyl group or a naphthyl group. The aralkyl group represented by $R^8$ is, for example, a phenylmethyl group or a phenylethyl group.

The linear, branched, or cyclic alkylene group represented by $R^{10}$ is the same as that represented by $R^7$.

Y preferably represents $-R^7O-$, and $R^7$ preferably represents an aryl-substituted alkylene group, in particular a residue of a phenol-based compound having an alkyl group, and more preferably represents an organic residue derived from allylphenol or an organic residue derived from eugenol.

With regard to p and q in the general formula (3), it is preferred that p = q, i.e., p = (n-2)/2 and q = (n-2)/2.

As described above, n represents preferably 20 to 85, more preferably 20 to 75, still more preferably 20 to 60.

β represents a divalent group derived from a diisocyanate compound, or a divalent group derived from a dicarboxylic acid or a halide of a dicarboxylic acid, and examples thereof include divalent groups represented by the following general formulae (7-1) to (7-5) .

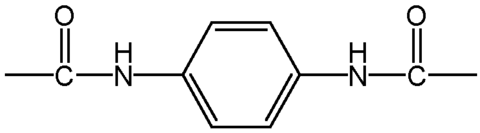
(7-1)

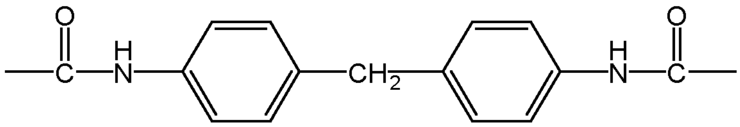
(7-2)

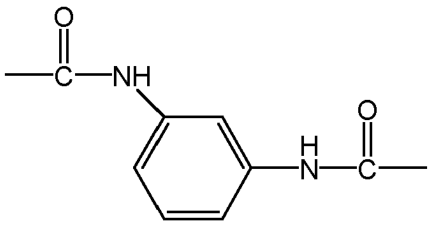
(7-3)

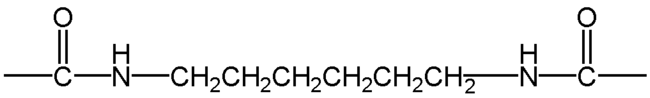
(7-4)

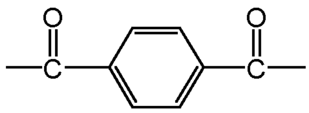
(7-5)

Examples of the polyorganosiloxane represented by the general formula (2) include compounds represented by the following general formulae (2-1) to (2-11):

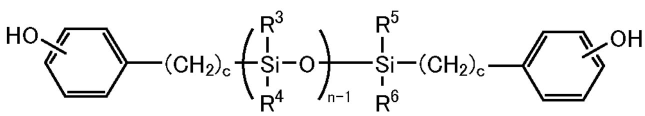
(2-1)

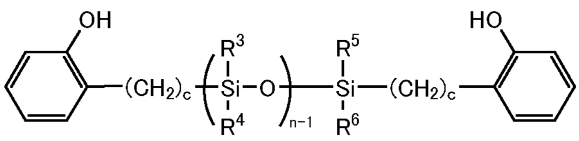
(2-2)

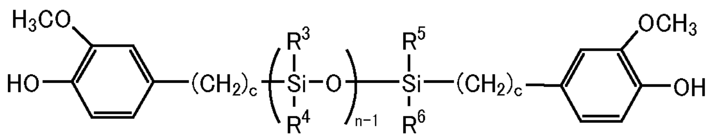
(2-3)

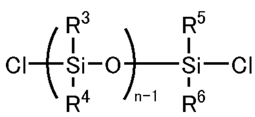
(2-4)

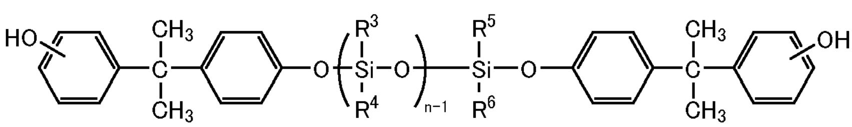
(2-5)

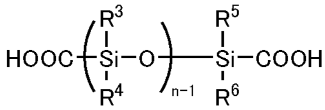
(2-6)

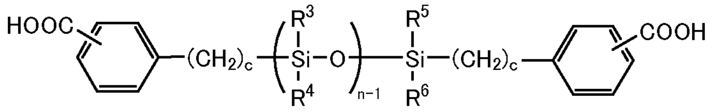
(2-7)

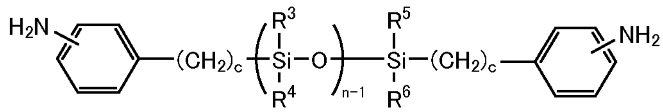
(2-8)

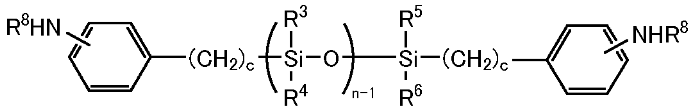
(2-9)

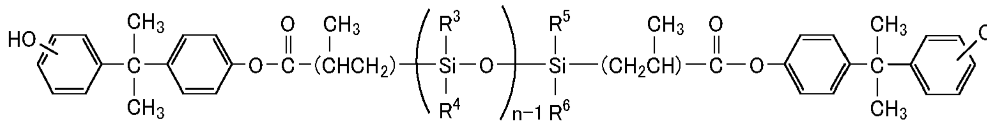
(2-10)

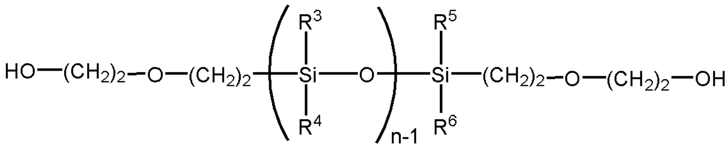
(2-11)

In the general formulae (2-1) to (2-11), $R^3$ to $R^6$, n, and $R^8$ are as defined above, and preferred examples thereof are also the same as those described above, and c represents a positive integer and typically represents an integer of from 1 to 6.

Among them, from the viewpoint of its ease of polymerization, a phenol-modified polyorganosiloxane represented by the general formula (2-1) is preferred. From the viewpoint of its ease of availability, α,ω-bis[3-(*o*-hydroxyphenyl) propyl]polydimethylsiloxane, which is one of compound represented by the general formula (2-2), or an α,ω-bis[3-(4-hydroxy-3-methoxyphenyl)propyl]polydimethylsiloxane, which is one of compound represented by the general formula (2-3), is preferred.

In addition to the polyorganosiloxane shown above, polyorganosiloxane compounds disclosed in the following documents may also be suitably used: JP 2013-523938 A, JP 04-225059 A, JP 2006-518803 A, WO 2013/115604 A1, and the like.

The average chain length n of the polyorganosiloxane represented by the general formula is preferably 30 to 85, more preferably 40 to 75, still more preferably 45 to 65. The average chain length n is calculated by nuclear magnetic resonance (NMR) measurement. When the average chain length n is 30 or more, the impact resistance at low temperature is sufficiently obtained. In addition, when the average chain length n is 85 or less, a copolymer excellent in molding external appearance can be obtained.

A gel permeation chromatographic (GPC) apparatus for obtaining the measured values of the molecular weight and molecular weight distribution of the polyorganosiloxane is not particularly limited, and a GPC apparatus that is generally on the market, such as a GPC measuring machine with an internal refractive index (RI) detector "HLC-8200" manufactured by Tosoh Corporation, can be utilized. In particular, a product obtained by coupling "TSK-GEL G4000HXL" and "TSK-GEL G2000HXL" manufactured by Tosoh Corporation is used as a GPC column. A column temperature is set to 40°C, tetrahydrofuran (THF) is used as an eluent, and measurement is performed at a flow rate of 1.0 ml/min. A standard polystyrene manufactured by Tosoh Corporation is used to obtain a calibration curve. The logarithmic value of a molecular weight thus obtained is referred to as "logarithmic molecular weight (log(M))."

In the time curve of an intensity distribution detected with the refractive index (RI) detector of the GPC apparatus (generally referred to as "elution curve"), an elution time is converted into a molecular weight by using the calibration curve obtained from the substance having a known molecular weight. Here, the intensity detected with the RI is in proportion to a

component concentration, and hence a concentration fraction at each elution time is determined by determining an intensity area when the total area of the elution curve is set to 100%. An integral molecular weight distribution curve can be obtained by sequentially integrating the concentration fraction, and plotting the logarithmic value of the molecular weight (log(M)) along an axis of abscissa and the integrated value of the concentration fraction (w) along an axis of ordinate.

Subsequently, a differential molecular weight distribution curve can be obtained by determining the differential value of the curve at each logarithmic value of the molecular weight (i.e., the gradient of the integral molecular weight distribution curve), and plotting the logarithmic value of the molecular weight (log(M)) along an axis of abscissa and the differential value (dw/dlog(M)) along an axis of ordinate. Therefore, a differential molecular weight distribution means a value obtained by differentiating the concentration fraction (w) with respect to the logarithmic value of the molecular weight (log(M)), i.e., "dw/dlog(M)." The differential molecular weight distribution dw/dlog(M) at a specific log(M) can be read from the differential molecular weight distribution curve. It should be noted that in the case of a polyorganosiloxane blend obtained by blending a plurality of polyorganosiloxanes as well, a differential molecular weight distribution curve can be obtained by the same approach after the measurement of the polyorganosiloxane blend by a GPC method.

In the present invention, (1) the dw/dlog(M) value becomes maximum in the range of $3.4 \leq \log(M) \leq 4.0$, preferably in the range of $3.5 \leq \log(M) \leq 3.8$. The maximum value of the differential molecular weight distribution dw/dlog(M) refers to a peak top in the differential molecular weight distribution curve. When the value for the log (M) of the peak top in the differential molecular weight distribution curve is 3.4 or more, sufficient low-temperature impact resistance is obtained, and when the value is 4.0 or less, satisfactory transparency is obtained.

In addition, (2) a ratio of a value obtained by integrating the dw/dlog (M) value over the range of $4.00 \leq \log(M) \leq 4.50$ to a value obtained by integrating the dw/dlog (M) value over the entire range of the log(M) in the differential molecular weight distribution curve is 6 to 40%, preferably 6.5 to 30%. When the ratio is 6% or more, sufficient low-temperature impact resistance is obtained. When the ratio is 40% or less, satisfactory transparency is obtained. Here, the ratio of the value obtained by integrating the dw/dlog (M) value over the range of $4.00 \leq \log(M) \leq 4.50$ to the value obtained by integrating the dw/dlog (M) value over the entire range of the log (M) refers to the ratio at which a component having a log(M) of from 4.00 to 4.50 is present with respect to the entirety of the POS in the molecular weight distribution of the POS.

A method of producing the polyorganosiloxane is not particularly limited. According to, for example, a method described in JP 11-217390 A, a crude polyorganosiloxane can be obtained by: causing cyclotrisiloxane and disiloxane to react with each other in the presence of an acid catalyst to synthesize $\alpha,\omega$-dihydrogen organopentasiloxane; and then subjecting a phenolic compound (such as 2-allylphenol, 4-allylphenol, eugenol, or 2-propenylphenol) or the like to an addition reaction with the $\alpha,\omega$-dihydrogen organopentasiloxane in the presence of a catalyst for a hydrosilylation reaction. In addition, according to a method described in JP 2662310 B2, the crude polyorganosiloxane can be obtained by: causing octamethylcyclotetrasiloxane and tetramethyldisiloxane to react with each other in the presence of sulfuric acid (acid catalyst); and subjecting a phenolic compound or the like to an addition reaction with the resultant $\alpha,\omega$-dihydrogen organopolysiloxane in the presence of the catalyst for a hydrosilylation reaction in the same manner as described above. The chain length n of the $\alpha,\omega$-dihydrogenorganopolysiloxane can be appropriately adjusted depending on a polymerization condition therefor before its use, or a commercially available $\alpha,\omega$-dihydrogen organopolysiloxane may be used.

Examples of the catalyst for a hydrosilylation reaction include transition metal-based catalysts. Among them, a platinum-based catalyst is preferably used in terms of a reaction rate and selectivity. Specific examples of the platinum-based catalyst include chloroplatinic acid, a solution of chloroplatinic acid in an alcohol, an olefin complex of platinum, a complex of platinum and a vinyl group-containing siloxane, platinum-supported silica, and platinum-supported activated carbon.

An adsorbent is preferably caused to adsorb and remove a transition metal derived from a transition metal-based catalyst used as the catalyst for a hydrosilylation reaction in the crude polyorganosiloxane by bringing the crude polyorganosiloxane into contact with the adsorbent.

An adsorbent having an average pore diameter of, for example, 1,000 Å or less can be used as the adsorbent. When the average pore diameter is 1,000 Å or less, the transition metal in the crude polyorganosiloxane can be efficiently removed. From such viewpoint, the average pore diameter of the adsorbent is preferably 500 Å or less, more preferably 200 Å or less, still more preferably 150 Å or less, yet still more preferably 100 Å or less. In addition, from the same viewpoint, the adsorbent is preferably a porous adsorbent.

The adsorbent is not particularly limited as long as the adsorbent has the above-mentioned average pore diameter. For example, there may be used activated clay, acidic clay, activated carbon, synthetic zeolite, natural zeolite, activated alumina, silica, a silica-magnesia-based adsorbent, diatomaceous earth, and cellulose. Among them, preferred is at least one selected from the group consisting of activated clay, acidic clay, activated carbon, synthetic zeolite, natural zeolite, activated alumina, silica, and a silica-magnesia-based adsorbent.

After the adsorbent has been caused to adsorb the transition metal in the crude polyorganosiloxane, the adsorbent can be separated from the polyorganosiloxane by arbitrary separating means. Examples of the means for separating the adsorbent from the polyorganosiloxane include a filter and centrifugation. When the filter is used, a filter such as a membrane filter, a sintered metal filter, or a glass fiber filter can be used. Among them, the membrane filter is

particularly preferably used.

The average particle diameter of the adsorbent is typically 1 μm to 4 mm, preferably 1 μm to 100 μm from the viewpoint of separating the adsorbent from the polyorganosiloxane after the adsorption of the transition metal.

When the adsorbent is used, its usage amount is not particularly limited. A porous adsorbent can be used in an amount in the range of preferably 1 to 30 parts by mass, more preferably 2 to 20 parts by mass with respect to 100 parts by mass of the crude polyorganosiloxane.

When the crude polyorganosiloxane to be treated has so high a molecular weight that the crude polyorganosiloxane is not in a liquid state, the polyorganosiloxane may be heated to such a temperature as to be in a liquid state upon performance of the adsorption with the adsorbent and the separation of the adsorbent. Alternatively, the adsorption and the separation may be performed under a state in which the polyorganosiloxane is dissolved in a solvent, such as methylene chloride or hexane.

A polyorganosiloxane having a desired molecular weight distribution is obtained by regulating its molecular weight distribution through, for example, the blending of a plurality of polyorganosiloxanes. With regard to the blending, a crude polyorganosiloxane having a desired molecular weight distribution can be obtained by blending a plurality of α,ω-dihydrogen organopolysiloxanes and then subjecting a phenol compound or the like to an addition reaction with the resultant in the presence of a catalyst for a hydrosilylation reaction. In addition, purification, such as the removal of the catalyst for a hydrosilylation reaction, may be performed after a plurality of crude polyorganosiloxanes have been blended. A plurality of polyorganosiloxanes after the purification may be blended. In addition, a molecular weight distribution can be appropriately adjusted depending on a polymerization condition at the time of the production of a polyorganosiloxane. In addition, a desired molecular weight distribution can be obtained by fractionating only part of existing polyorganosiloxanes through means such as various kinds of separation.

<Method of producing PC-POS Copolymer (A)>

A known production method, such as an interfacial polymerization method (phosgene method), a pyridine method, or an ester exchange method, can be employed as a method of producing the PC-POS copolymer (A) to be used in the present invention. Particularly in the case of the interfacial polymerization method, the step of separating an organic phase containing the PC-POS copolymer (A) and an aqueous phase containing an unreacted substance, a catalyst residue, or the like becomes easy, and hence the separation of the organic phase containing the PC-POS copolymer (A) and the aqueous phase in each washing step based on alkali washing, acid washing, or pure water washing becomes easy. Accordingly, the PC-POS copolymer (A) is efficiently obtained.

The method of producing the PC-POS copolymer (A) is not particularly limited and the copolymer can be produced with reference to a known method of producing a PC-POS copolymer, such as a method described in JP 2010-241943 A.

Specifically, the PC-POS copolymer (A) can be produced by: dissolving a polycarbonate oligomer produced in advance and the polyorganosiloxane in a water-insoluble organic solvent (such as methylene chloride); adding an alkaline aqueous solution (such as aqueous sodium hydroxide) of a dihydric phenol-based compound (such as bisphenol A) to the solution; and subjecting the mixture to an interfacial polycondensation reaction through the use of a tertiary amine (such as triethylamine) or a quaternary ammonium salt (such as trimethylbenzylammonium chloride) as a polymerization catalyst in the presence of a terminal stopper (a monohydric phenol, such as *p-t*-butylphenol). In addition, the PC-POS copolymer (A) can be produced by copolymerizing a polyorganosiloxane, a dihydric phenol, and phosgene, a carbonate, or a chloroformate.

In the present invention, as described above, a polyorganosiloxane having the following characteristics is used as a raw material: when the axis of ordinate and the axis of abscissa in a differential molecular weight distribution curve obtained from the results of measurement by the GPC method using the polystyrene calibration curve represent dw/dlog(M) and log(M), where w represents a concentration fraction and M represents a molecular weight, respectively, (1) a dw/dlog(M) value becomes maximum in the range of $3.4 \leq \log(M) \leq 4.0$, and (2) the ratio of a value obtained by integrating the dw/dlog(M) value over the range of $4.00 \leq \log(M) \leq 4.50$ to a value obtained by integrating the dw/dlog (M) value over the entire range of the log (M) in the differential molecular weight distribution curve is 6 to 40%. Specifically, a polyorganosiloxane represented by the general formula (2), (3), or (4) is used.

The polycarbonate oligomer can be produced through a reaction of a dihydric phenol and a carbonate precursor, such as phosgene or triphosgene, in an organic solvent, such as methylene chloride, chlorobenzene, or chloroform. When the polycarbonate oligomer is produced by using an ester exchange method, the oligomer can also be produced through a reaction of a dihydric phenol and a carbonate precursor, such as diphenyl carbonate.

A dihydric phenol represented by the following general formula (i) is preferably used as the dihydric phenol:

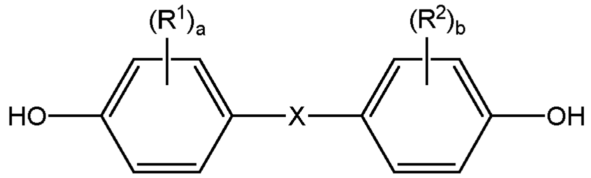

(i)

wherein $R^1$, $R^2$, a, b, and X are as described above.

Examples of the dihydric phenol represented by the general formula (i) include a bis(hydroxyaryl)alkane, a bis(hydroxyaryl)cycloalkane, a dihydroxyaryl ether, a dihydroxydiaryl sulfide, a dihydroxydiaryl sulfoxide, a dihydroxydiaryl sulfone, a dihydroxydiphenyl, a dihydroxydiarylfluorene, and a dihydroxydiaryladamantane. Those dihydric phenols may be used alone or as a mixture thereof.

Examples of the bis(hydroxyaryl)alkane include bis(4-hydroxyphenyl)methane, 1,1-bis(4-hydroxyphenyl) ethane, 2,2-bis(4-hydroxyphenyl)propane [bisphenol A], 2,2-bis(4-hydroxyphenyl)butane, 2,2-bis(4-hydroxyphenyl)octane, bis(4-hydroxyphenyl)phenylmethane, bis(4-hydroxyphenyl)diphenylmethane, 2,2-bis(4-hydroxy-3-methylphenyl) propane, bis(4-hydroxyphenyl)naphthylmethane, 1,1-bis(4-hydroxy-3-t-butylphenyl)propane, 2,2-bis(4-hydroxy-3-bromophenyl)propane, 2,2-bis(4-hydroxy-3,5-dimethylphenyl)propane, 2,2-bis(4-hydroxy-3-chlorophenyl) propane, 2,2-bis(4-hydroxy-3,5-dichlorophenyl)propane, and 2,2-bis(4-hydroxy-3,5-dibromophenyl) propane.

Examples of the bis(hydroxyaryl)cycloalkane include 1,1-bis(4-hydroxyphenyl)cyclopentane, 1,1-bis(4-hydroxyphenyl)cyclohexane, 1,1-bis(4-hydroxyphenyl)-3,5,5-trimethylcyclohexane, 2,2-bis(4-hydroxyphenyl)norbornene, and 1,1-bis(4-hydroxyphenyl)cyclododecane. Examples of the dihydroxyaryl ether include 4,4'-dihydroxydiphenyl ether and 4,4'-dihydroxy-3,3'-dimethylphenyl ether.

Examples of the dihydroxydiaryl sulfide include 4,4'-dihydroxydiphenyl sulfide and 4,4'-dihydroxy-3,3'-dimethyldiphenyl sulfide. Examples of the dihydroxydiaryl sulfoxide include 4,4'-dihydroxydiphenyl sulfoxide and 4,4'-dihydroxy-3,3'-dimethyldiphenyl sulfoxide. Examples of the dihydroxydiaryl sulfone include 4,4'-dihydroxydiphenyl sulfone and 4,4'-dihydroxy-3,3'-dimethyldiphenyl sulfone.

An example of the dihydroxydiphenyl is 4,4'-dihydroxydiphenyl. Examples of the dihydroxydiarylfluorene include 9,9-bis(4-hydroxyphenyl)fluorene and 9,9-bis(4-hydroxy-3-methylphenyl) fluorene. Examples of the dihydroxydiaryladamantane include 1,3-bis(4-hydroxyphenyl)adamantane, 2,2-bis(4-hydroxyphenyl)adamantane, and 1,3-bis(4-hydroxyphenyl)-5,7-dimethyladamantane.

Examples of the dihydric phenol other than the above-mentioned dihydric phenols include 4,4'-[1,3-phenylenebis(1-methylethylidene) ]bisphenol, 10,10-bis(4-hydroxyphenyl)-9-anthrone, and 1,5-bis(4-hydroxyphenylthio)-2,3-dioxapentane.

The dihydric phenols may be used alone or as a mixture thereof.

Among them, bis(hydroxyphenyl)alkanes are preferred, and bisphenol A is more preferred. When bisphenol A is used as the dihydric phenol, X represents an isopropylidene group and a relationship of a = b = 0 is satisfied in the general formula (i).

In order to control the molecular weight of the PC-POS copolymer to be obtained, a terminal stopper can be used. Examples of the terminal stopper may include monohydric phenols, such as phenol, p-cresol, p-tert-butylphenol, p-tert-octylphenol, p-cumylphenol, p-nonylphenol, m-pentadecylphenol, and p-tert-amylphenol. Those monohydric phenols may be used alone or in combination thereof.

After the interfacial polycondensation reaction, the liquid is appropriately left at rest to be separated into an aqueous phase and an organic solvent phase [separating step, the organic solvent phase is washed (preferably washed with a basic aqueous solution, an acidic aqueous solution, and water in the stated order) [washing step], and the resultant organic phase is concentrated [concentrating step], and dried [drying step]. Thus, the PC-POS copolymer can be obtained.

The PC-POS copolymer (A) to be used in the present invention can be produced by appropriately using, for example, a molecular weight modifier so that its viscosity-average molecular weight may be a molecular weight intended for an application or product in which the copolymer is used. The copolymer is produced so as to have a viscosity-average molecular weight in the range of typically 14,000 to 22,000, preferably about 16,000 to about 20,000. When the viscosity-average molecular weight is 14,000 or more, the strength of a molded body is sufficient. When the viscosity-average molecular weight is 22,000 or less, injection molding or extrusion molding can be performed in a proper temperature region, and hence satisfactory transparency is obtained.

The viscosity of the PC-POS copolymer (A) can be reduced by increasing its molding temperature. In that case, however, its molding cycle lengthens to result in poor economical efficiency. Moreover, when the temperature is excessively increased, the transparency tends to reduce owing to the heat deterioration of the PC-POS copolymer (A).

The viscosity-average molecular weight (Mv) is a value calculated from Schnell's equation ( $[\eta] = 1.23 \times 10^{-5} \times Mv^{0.83}$) by measuring the limiting viscosity $[\eta]$ of a methylene chloride solution (concentration unit: g/L) at 20°C.

<Styrene-based Resin>

The styrene-based resin (B) to be used in the polycarbonate-based resin composition of the present invention preferably has constituent units derived from acrylonitrile and styrene, and more preferably has constituent units derived from butadiene, acrylonitrile, and styrene, and an amorphous styrene-based resin and a crystalline styrene-based resin can each be used. In the present invention, one of styrene-based resin may be used as the styrene-based resin (B), or two or more of styrene-based resins may be used in combination as the resin.

The blending amount of the styrene-based resin (B) is preferably 0 to 70 mass%, more preferably 10 to 50 mass%, still more preferably 10 to 40 mass%, particularly preferably 20 to 30 mass% from the viewpoint of improving the moldability of the polycarbonate-based resin composition, in particular, its flowability.

The amorphous styrene-based resin is, for example, a polymer free of any crystal structure obtained by polymerizing a monomer or monomer mixture formed of 20 to 100 mass% of a monovinylic aromatic monomer, such as styrene or $\alpha$-methylstyrene, 0 to 60 mass% of a vinyl cyanide-based monomer, such as acrylonitrile or methacrylonitrile, and 0 to 50 mass% of any other vinylic monomer copolymerizable with these monomers, such as maleimide or methyl (meth) acrylate.

Examples of the polymer include a general-purpose polystyrene (GPPS) and an acrylonitrile-styrene copolymer (AS resin).

A rubber-modified styrene-based resin reinforced with a rubber-like polymer may be preferably utilized as the amorphous styrene-based resin. The rubber-modified styrene-based resin is preferably an acrylonitrile-butadiene-styrene terpolymer, and examples thereof include: high-impact polystyrene (HIPS) obtained by polymerizing styrene with a rubber such as polybutadiene; an acrylonitrile-butadiene-styrene copolymer (ABS resin) obtained by polymerizing acrylonitrile and styrene with polybutadiene; and a methyl methacrylate-butadiene-styrene copolymer (MBS resin) obtained by polymerizing methyl methacrylate and styrene with polybutadiene. The rubber-modified styrene-based resins may be used in combination thereof, and may also be used as a mixture with the rubber-unmodified amorphous styrene-based resin.

The content of the rubber in the rubber-modified styrene-based resin is preferably 2 to 50 mass%, more preferably 5 to 30 mass%, still more preferably 5 to 15 mass%. When the ratio of the rubber is 2 mass% or more, the impact resistance of the composition is sufficient, and when the ratio is 50 mass% or less, a problem, such as a reduction in thermal stability thereof, a reduction in melt flowability thereof, the occurrence of gel, or the coloring thereof, does not occur.

Specific examples of the rubber include polybutadiene, a rubbery polymer containing acrylate and/or methacrylate, a styrene-butadiene-styrene rubber (SBS), a styrene-butadiene rubber (SBR), a butadiene-acrylic rubber, an isoprene rubber, an isoprene-styrene rubber, an isoprene-acrylic rubber, and an ethylene-propylene rubber. Among them, polybutadiene is particularly preferred. Any one of a polybutadiene having a low 1,4-cis bond content (for example, containing 1 to 30 mol% of a 1,2-vinyl bond and 30 to 42 mol% of a 1,4-cis bond) or a polybutadiene having a high 1,4-cis bond content (for example, containing 20 mol% or less of a 1,2-vinyl bond and 78 mol% or more of a 1,4-cis bond) may be used as the polybutadiene to be used herein. In addition, the polybutadiene may be a mixture thereof.

The crystalline styrene-based resin is, for example, a styrene-based (co)polymer having a syndiotactic structure or an isotactic structure. However, in the present invention, the amorphous styrene-based resin is preferably used for the purpose of further improving the flowability of the composition. Further, a resin having a melt flow rate (MFR) at 200°C and a load of 5 kg of preferably 0.5 g/10 minutes to 100 g/10 minutes, more preferably 2 g/10 minutes to 80 g/10 minutes, still more preferably 2 g/10 minutes to 50 g/10 minutes out of the amorphous styrene-based resins is used. When the melt flow rate (MFR) is 0.5 g/10 minutes or more, sufficient flowability is obtained, and when the melt flow rate is 100 g/10 minutes or less, the impact resistance of the flame-retardant polycarbonate-based resin composition becomes satisfactory.

Further, among the amorphous styrene-based resins, a high-impact polystyrene resin (HIPS), an acrylonitrile-styrene copolymer (AS resin), an acrylonitrile-butadiene-styrene copolymer (ABS resin), a methyl methacrylate-styrene copolymer (MS resin), a methyl methacrylate-butadiene-styrene copolymer (MBS resin), an acrylonitrile-methyl acrylate-styrene copolymer (AAS resin), and an acrylonitrile-(ethylene/propylene/diene copolymer)-styrene copolymer (AES resin) are preferred, and an acrylonitrile-styrene copolymer (AS resin), an acrylonitrile-butadiene-styrene copolymer (ABS resin), and a methyl methacrylate-butadiene-styrene copolymer (MBS resin) are particularly preferred.

<Flame Retardant>

The flame retardant (C) to be used in the polycarbonate-based resin composition of the present invention is at least one selected from an organic alkali metal salt, an organic alkaline earth metal salt, a silicone-based flame retardant, and a phosphorus-based flame retardant. The flame retardants (C) may be used alone or in combination thereof. The flame retardant (C) is preferably anyone of an organic alkali metal salt, an organic alkaline earth metal salt, a silicone-based flame retardant, and a phosphorus-based flame retardant.

The blending amount of the flame retardant (C) is preferably 0.01 to 10 parts by mass, more preferably 0.1 to 1 part by mass, still more preferably 0.01 to 0.5 parts by mass with respect to 100 parts by mass of the total amount of the polycarbonate-based resin containing the polycarbonate-polyorganosiloxane copolymer (A) and the styrene-based resin (B). When the blending amount is 0.01 to 10 parts by mass, sufficient flame retardancy is obtained. As long as the blending amount falls within the range of 0.01 to 10 parts by mass, a preferred range can be appropriately selected in accordance with the kind of the flame retardant (C). For example, when the flame retardant (C) is a phosphorus-based flame retardant, its blending amount is preferably 1 to 10 parts by mass, when the flame retardant (C) is a silsesquioxane, its blending amount is preferably 0.1 to 0.5 parts by mass, and when the flame retardant (C) is a perfluoroalkane sulfonic acid alkali metal salt, its blending amount is preferably 0.01 to 0.1 part by mass.

An organic alkali acid metal salt and an organic alkali acid earth metal salt serving as the flame retardant (C) to be used in the polycarbonate-based resin composition of the present invention may be used alone or in combination thereof. The flame retardant (C) is preferably any one of an organic alkali acid metal salt and an organic alkali acid earth metal salt. As the flame retardant (C), a compound selected from an organic sulfonic acid salt of an alkali metal or alkaline earth metal and a polyorganosiloxane-containing graft copolymer is preferably blended.

Examples of the organic sulfonic acid salt of the alkali metal or alkaline earthmetal (hereinafter sometimes collectively referred to as "alkali (ne earth) metal") include: a metal salt of a fluorine-substituted alkyl sulfonic acid, such as a metal salt of a perfluoroalkane sulfonic acid and an alkali metal or an alkaline earth metal; and a metal salt of an aromatic sulfonic acid and an alkali metal or an alkaline earth metal.

Examples of the alkali metal include lithium, sodium, potassium, rubidium, and cesium. Examples of the alkaline earth metal include beryllium, magnesium, calcium, strontium, and barium. Among them, an alkali metal is more preferred.

Among those alkali metals, potassium and sodium are preferred, and potassium is particularly preferred from the viewpoints of flame retardancy and thermal stability.

A potassium salt and a sulfonic acid alkali metal salt formed of another alkali metal may be used in combination.

Specific examples of the perfluoroalkane sulfonic acid alkali metal salt include potassium perfluorobutane sulfonate, potassium trifluoromethane sulfonate, potassium perfluorohexane sulfonate, potassium perfluorooctane sulfonate, sodium pentafluoroethane sulfonate, sodium perfluorobutane sulfonate, sodium perfluorooctane sulfonate, lithium trifluoromethane sulfonate, lithium perfluorobutane sulfonate, lithium perfluoroheptane sulfonate, cesium trifluoromethane sulfonate, cesium perfluorobutane sulfonate, cesium perfluorooctane sulfonate, cesium perfluorohexane sulfonate, rubidium perfluorobutane sulfonate, and rubidium perfluorohexane sulfonate. The perfluoroalkane sulfonic acid alkali metal salts may be used alone or in combination thereof.

Herein, the number of carbon atoms of the perfluoroalkyl group is preferably 1 to 18, more preferably 1 to 10, still more preferably 1 to 8.

Among them, potassium perfluorobutane sulfonate is particularly preferred. The blending amount of potassium perfluorobutane sulfonate serving as the flame retardant (C) is preferably 0.001 to 1 part by mass, more preferably 0.01 to 0.1 part by mass, still more preferably 0.02 to 0.08 parts by mass with respect to 100 parts by mass of the total amount of the polycarbonate-based resin containing the polycarbonate-polyorganosiloxane copolymer (A) and the styrene-based resin (B). When the blending amount is 0.001 part by mass or more, sufficient flame retardancy is obtained, and when the blending amount is 1 part by mass or less, the contamination of a die can be suppressed.

Specific examples of the aromatic sulfonic acid alkali(ne earth) metal salt include diphenyl sulfide-disodium 4,4'-disulfonate, diphenyl sulfide-dipotassium 4,4'-disulfonate, potassium 5-sulfoisophthalate, sodium 5-sulfoisophthalate, polysodium polyethylene terephthalate polysulfonate, calcium 1-methoxynaphthalene-4-sulfonate, disodium 4-dodecyl phenyl ether disulfonate, polysodium poly(2,6-dimethylphenylene oxide) polysulfonate, polysodiumpoly (1,3-phenylene oxide) polysulfonate, polysodiumpoly (1,4-phenylene oxide) polysulfonate, polypotassium poly(2,6-diphenylphenylene oxide) polysulfonate, lithium poly(2-fluoro-6-butylphenylene oxide) polysulfonate, potassium benzenesulfonate, sodium benzenesulfonate, sodium p-toluenesulfonate, strontium benzenesulfonate, magnesium benzenesulfonate, dipotassium p-benzenedisulfonate, dipotassium naphthalene-2,6-disulfonate, calcium biphenyl-3,3'-disulfonate, sodium diphenyl sulfone-3-sulfonate, potassium diphenyl sulfone-3-sulfonate, dipotassium diphenyl sulfone-3,3'-disulfonate, dipotassium diphenyl sulfone-3,4'-disulfonate, sodium $\alpha,\alpha,\alpha$-trifluoroacetophenone-4-sulfonate, dipotassium benzophenone-3,3'-disulfonate, disodium thiophene-2,5-disulfonate, dipotassium thiophene-2,5-disulfonate, calcium thiophene-2,5-disulfonate, sodium benzothiophene sulfonate, potassium diphenyl sulfoxide-4-sulfonate, a formalin condensate of sodium naphthalenesulfonate, and a formalin condensate of sodium anthracenesulfonate.

Among those aromatic sulfonic acid alkali (ne earth) metal salts, a sodium salt and a potassium salt are particularly suitable.

Examples of the silicone-based flame retardant include a silicone oil and a silicone resin.

Examples of the silicone-based flame retardant include (poly) organosiloxanes each having a functional group. Examples of the functional group include an alkoxy group, an aryloxy group, a polyoxyalkylene group, a hydrogen group, a hydroxy group, a carboxyl group, a cyano group, an amino group, a mercapto group, and an epoxy group. The silicone-based flame retardant is particularly preferably a silsesquioxane.

The blending amount of the silsesquioxane serving as the flame retardant (C) is preferably 0.01 to 5 parts by mass, more preferably 0.05 to 1 part by mass, still more preferably 0.1 to 0.5 parts by mass with respect to 100 parts by mass of the total amount of the polycarbonate-based resin containing the polycarbonate-polyorganosiloxane copolymer (A) and the styrene-based resin (B) . When the blending amount is 0.01 part by mass or more, sufficient flame retardancy is obtained, and when the blending amount is 5 parts by mass or less, the contamination of a die can be suppressed.
Examples of the phosphorus-based flame retardant serving as the flame retardant (C) include red phosphorus and a phosphoric acid ester-based flame retardant.
The phosphoric acid ester-based flame retardant is particularly preferably free of any halogen, and examples thereof include monomers, oligomers, and polymers of phosphoric acid esters or mixtures thereof. Specific examples thereof include triphenyl phosphate, tricresyl phosphate, cresyl diphenyl phosphate, trixylenylphosphate, tris(isopropylphenyl)phosphate, trinaphthyl phosphate, bisphenol A bisphosphate, hydroquinone bisphosphate, resorcin bisphosphate, resorcinol-diphenyl phosphate, and trioxybenzenetriphosphate, or substituted products and condensates thereof.
The phosphorus-based flame retardants may be used alone or in combination thereof.
The blending amount of the phosphorus-based flame retardant serving as the flame retardant (C) is preferably 0.1 to 20 parts by mass, more preferably 1 to 15 parts by mass, still more preferably 1 to 10 parts by mass with respect to 100 parts by mass of the total amount of the polycarbonate-based resin containing the polycarbonate-polyorganosiloxane copolymer (A) and the styrene-based resin (B). When the blending amount is 0.1 part by mass or more, sufficient flame retardancy is obtained, and when the blending amount is 20 parts by mass or less, reductions in, for example, chemical resistance, heat resistance, tensile elongation, and impact resistance can be suppressed.

<Flame Retardant Aid>

A polytetrafluoroethylene (PTFE) having a fibril-forming ability, the polytetrafluorethylene imparting flame retardancy, can be used as the flame retardant aid (D) to be used in the polycarbonate-based resin composition of the present invention. The polytetrafluorethylene serving as the flame retardant aid (D) is blended for improving the anti-dripping effect and flame retardancy of the composition, and is not particularly limited, and a known polytetrafluoroethylene can be used. However, an aqueous dispersion-type polytetrafluoroethylene or an acryl-coated polytetrafluoroethylene is preferred.
The blending amount of the polytetrafluoroethylene serving as the flame retardant aid (D) is preferably 0.01 to 1 part by mass, more preferably 0.05 to 0.8 parts by mass, still more preferably 0.1 to 0.6 parts by mass with respect to 100 parts by mass of the total amount of the polycarbonate-based resin containing the polycarbonate-polyorganosiloxane copolymer (A) and the styrene-based resin (B) . When the blending amount is 1 part by mass or less, an increase in amount of the aggregate of the polytetrafluoroethylene can be avoided.

<Inorganic Filler>

Various fillers can each be used as the inorganic filler (E) to be used in the polycarbonate-based resin composition of the present invention, and specifically, a glass material, carbon fibers, or any other inorganic filler can be used. For example, glass fibers, glass beads, glass flakes, or glass powder can be used as the glass material. Here, the glass fibers to be used may be any one of alkali glass, low-alkali glass, and alkali-free glass.
The fiber length of each of the glass fibers is preferably about 0.1 to about 8 mm, more preferably 0.3 to 6 mm. The average fiber diameter of the glass fibers is preferably 1 to 30 μm, more preferably 5 to 25 μm, still more preferably 8 to 20 μm. When the average fiber diameter is 1 μm or more, the fibers hardly break and are each easily improved in rigidity, and when the average fiber diameter is 30 μm or less, a problem, such as the deterioration of the external appearance of a molded body, hardly occurs.
In addition to a perfect circular shape, a shape except a perfect circle, such as a flat shape, an elliptical shape, a cocoon shape, or a three-leaved shape, may be used as the shape of a section of each of the glass fibers. Further, a mixture of perfect circular glass fibers and glass fibers each having a shape except a perfect circle is also permitted. With regard to glass fibers each having a flat section, the average short diameter of the sections of the fibers is preferably 5 to 15 μm, more preferably 6 to 13 μm, still more preferably 8 to 10 μm, and the average long diameter thereof is preferably 7.5 to 90 μm, more preferably 9.5 to 70 μm, still more preferably 14 to 45 μm. In addition, the ratio (long diameter/short diameter) of the average long diameter of the glass fibers each having a flat section to the average short diameter thereof, i.e., a flattening is preferably 1.5 to 6, more preferably 1.6 to 5.5, still more preferably 1.8 to 4.5. The average fiber length of the glass fibers each having a flat section is preferably 1 to 5 mm, more preferably 2 to 4 mm. In addition, the ratio (average fiber length/average fiber diameter) of the average fiber length of the glass fibers each having a flat section to the average fiber diameter (average of the average short diameter and the average long diameter) thereof, i.e., an aspect ratio is preferably 10 to 400, more preferably 50 to 300, still more preferably 100 to 240.

The forms of the glass fibers are not particularly limited, and examples thereof include various forms, such as a roving, a milled fiber, and a chopped strand. Those glass fibers may be used alone or in combination thereof. In addition, the glass material may be subjected to a surface treatment with, for example, a silane-based coupling agent, such as an aminosilane-, epoxysilane-, vinylsilane-, or methacrylsilane-based coupling agent, a chromium complex compound, or a boron compound for improving its affinity for a resin.

The blending amount of the glass fibers serving as the inorganic filler (E) is preferably 1 to 70 parts by mass, more preferably 5 to 60 parts by mass, still more preferably 5 to 40 parts by mass, particularly preferably 5 to 30 parts by mass with respect to 100 parts by mass of the total amount of the polycarbonate-based resin containing the polycarbonate-polyorganosiloxane copolymer (A) and the styrene-based resin (B). When the blending amount of the glass fibers serving as the inorganic filler (E) is 1 part by mass or more, target rigidity and a target flame retardancy-improving effect are sufficiently obtained, and when the blending amount is 70 parts by mass or less, peeling does not occur in the vicinity of the gate of amoldedbody, and the flowability of the composition is sufficient.

Glass fibers obtained by subjecting glass fibers to a bundling treatment with a bundling agent in advance are preferably used as the glass fibers. The bundling agent comes in several kinds, such as polyurethane-, epoxy resin-, vinyl acetate resin-, and polyacrylic acid-based bundling agents.

The glass fibers to be used in the present invention are such that about 100 to about 1,000 of the glass fibers are treated with the above-mentioned bundling agent to be bundled into a strand. A method of subjecting the glass fibers to the bundling treatment with the bundling agent is not particularly limited, and arbitrary methods including methods that have heretofore been commonly used, such as dip coating, roller coating, blow coating, flow coating, and spray coating, can each be used. Next, the resultant strand is cut so that an average fiber length of 1 to 8 mm, preferably about 3 to about 6 mm may be obtained. A chopped strand thus obtained is used.

The glass fibers to be subjected to the bundling treatment with the bundling agent may be subjected to a surface treatment with a silane-based coupling agent, such as an aminosilane-, epoxysilane-, vinylsilane-, or methacrylsilane-based coupling agent, or a titanate-, aluminum-, chromium-, zirconium-, or borane-based coupling agent. Among them, a silane-based coupling agent and a titanate-based coupling agent are preferred, and a silane-based coupling agent is particularly suitable. Specific examples of the suitable silane-based coupling agent include triethoxysilane, vinyltris(β-methoxyethoxy)silane, γ-methacryloxypropyltrimethoxysilane, γ-glycidoxypropyltrimethoxysilane, *β*-(3,4-epoxycyclohexyl)ethyltrimethoxysilane, *N*-*β*-(aminoethyl)-*γ*-aminopropylmethyldimethoxysilane, *N*-*β*-(aminoethyl)-*γ*-aminopropyltrimethoxysilane, *γ*-aminopropyltriethoxysilane, *N*-phenyl-γ-aminopropyltrimethoxysilane, *γ*-mercaptopropyltrimethoxysilane, and γ-chloropropyltrimethoxysilane. Among them, *γ*-aminopropyltriethoxysilane and *N*-*β*-(aminoethyl)-*γ*-aminopropyltrimethoxysilane are suitably used.

A method of subjecting the glass fibers to be subjected to the bundling treatment with the bundling agent to the surface treatment with the above-mentioned coupling agent is not particularly limited, and arbitrary methods including methods that have heretofore been commonly used, such as an aqueous solution method, an organic solvent method, and a spray method, can each be used. Although the usage amounts of the bundling agent and the coupling agent are not particularly limited, the agents are typically used so that their total amount may be 0.1 to 1.5 mass% with respect to the glass fibers.

The carbon fibers are generally produced by calcining cellulose fibers, acrylic fibers, lignin, petroleum, coal-based pitch, or the like serving as a raw material, and come in various types, such as flameproof fibers, carbonaceous fibers, and graphite fibers. The fiber length of each of the carbon fibers falls within the range of preferably about 0.01 to about 10 mm, more preferably 0.02 to 8 mm, and the fiber diameter of each of the fibers is preferably about 1 to about 15 μm, more preferably 5 to 13 μm. In addition, The forms of the carbon fibers are not particularly limited, and examples thereof include various forms, such as a roving, a milled fiber, and a chopped strand. Those carbon fibers may be used alone or in combination thereof.

As the other inorganic filler (E), for example, aluminum fibers, calcium carbonate, magnesium carbonate, dolomite, silica, diatomaceous earth, alumina, titanium oxide, iron oxide, zinc oxide, magnesium oxide, calciumsulfate, magnesium sulfate, calciumsulfite, talc, clay, mica, asbestos, calcium silicate, montmorillonite, bentonite, carbon black, graphite, iron powder, lead powder, and aluminum powder may also be used.

<Other Additive>

Any other additive can be incorporated into the polycarbonate-based resin composition of the present invention to the extent that the effects of the present invention are not impaired. Examples of the other additive may include a release agent and a dye.

The polycarbonate-based resin composition of the present invention is obtained by: blending the above-mentioned respective components at the above-mentioned ratios and various optional components to be used as required at appropriate ratios; and kneading the components.

The blending and the kneading may be performed by a method involving premixing with a typically used

apparatus, such as a ribbon blender or a drum tumbler, and using, for example, a Henschel mixer, a Banbury mixer, a single-screw extruder, a twin-screw extruder, a multi-screw extruder, or a Ko-kneader. In normal cases, a heating temperature at the time of the kneading is appropriately selected from the range of 240 to 320°C. An extruder, in particular a vented extruder is preferably used as the melt-kneading molding machine.

[Molded Body]

Various molded bodies can be produced from the polycarbonate-based resin composition of the present invention through molding with the melt-kneading molding machine, or by using a pellet obtained from the composition as a raw material through molding by an injection molding method, an injection compression molding method, an extrusion molding method, a blow molding method, a press molding method, a vacuum molding method, an expansion molding method, and the like. In particular, the resultant pellet can be suitably used in the production of injection-molded bodies by injection molding and injection compression molding.

The molded body comprising the polycarbonate-based resin composition of the present invention can be suitably used as, for example,

(1) a part for electrical and electronic equipment, such as a television, a radio-cassette player, a video camera, a videotape recorder, an audio player, a DVDplayer, an air conditioner, a cellular phone, a display, a computer, a register, an electronic calculator, a copying machine, a printer, or a facsimile, or

(2) a casing for the electrical and electronic equipment described in the (1).

EXAMPLES

The present invention is more specifically described by way of Examples. In each of Examples, characteristic values and evaluation results were determined in the following manner.

(1) Gel Permeation Chromatography (GPC)

The GPC measurement of the polyorganosiloxane was carried out under the following conditions.

Test apparatus: TOSOH HLC 8220
Column: TOSOH TSK-GEL GHXL-L, G4000HXL, G2000HXL
Solvent: tetrahydrofuran (THF)
Column temperature: 40°C
Flow rate: 1.0 ml/min
Detector: RI
Injection concentration: 0.1 w/v%
Injection amount: 0.1 ml

Standard polystyrene manufactured by Tosoh Corporation was used to obtain a calibration curve.

A differential molecular weight distribution curve can be obtained by such method as described below. First, the time curve of an intensity distribution detected with a RI detector (elution curve) was converted into a molecular weight distribution curve with respect to the logarithmic value of a molecular weight (log (M) ) by using a calibration curve. Next, an integral molecular weight distribution curve with respect to the log(M) when the total area of the distribution curve was set to 100% was obtained. After that, a differential molecular weight distribution curve with respect to the log(M) can be obtained by differentiating the integral molecular weight distribution curve with respect to the log(M). It should be noted that a series of operations up to the acquisition of the differential molecular weight distribution curve can be typically performed with analysis software built in a GPC measuring apparatus. Fig. 1 is a graph for showing an example of the differential molecular weight distribution curve to be obtained. In the graph, the log(M) value at which a dw/dlog(M) value becomes maximum is shown and a value obtained by integrating dw/dlog(M) over the range of $4.00 \leq \log(M) \leq 4.50$ is shown in a shaded area.

The GPC measurement of the polyorganosiloxane block (A-2) in the polycarbonate-polyorganosiloxane copolymer (A) was performed under the following conditions.

20 ml of methylene chloride was added to 4.3 g of the resultant PC-POS copolymer flake to completely dissolve the flake. While the solution was stirred with a magnetic stirrer, 20 ml of a solution of sodium hydroxide in methanol (obtained by mixing 48 mass% aqueous NaOH and methanol at a volume ratio of 1: 9) was added to the solution, followed by stirring for 30 minutes. In order for a precipitated solid crystal derived from a PC to be dissolved, 25 ml of ion-exchanged water was added to the mixture, and the whole was stirred for 1 minute and then left at rest to be separated into an organic layer and an aqueous layer. Thus, the organic layer was obtained. The organic layer was washed by adding 15 vol% of 0.03

mol/L aqueous NaOH with respect to the organic layer to the organic layer and stirring the mixture, and then the mixture was subjected to settled separation to provide an organic layer; the foregoing operation was performed twice. The resultant organic layer was washed by adding 15 vol% of 0.2 mol/L hydrochloric acid with respect to the organic layer to the organic layer and stirring the mixture, and then the mixture was subjected to settled separation to provide an organic layer. Next, the organic layer was washed by adding 15 vol% of pure water with respect to the organic layer to the organic layer and stirring the mixture, and then the mixture was subjected to settled separation to provide an organic layer. The resultant organic layer was dried with a dryer at 60°C for 16 hours. The spectrum of the resultant sample was measured by GPC. Here, it is found from the resultant GPC spectrum that when a molecular weight in terms of polystyrene is represented by M, the sample is formed of a low-molecular weight component derived from the PC having the maximum value at a log [M] of 2.0 or more and less than 3.0, and a POS component having the maximum value at a log [M] of 3.0 or more and less than 4.5. The molecular weight distribution of the used polyorganosiloxane can be identified by identifying the spectrum of the POS.

(2) Chain Length and Content of Polydimethylsiloxane (PDMS)

The chain length and content of a polydimethylsiloxane were calculated by NMR measurement from the integrated value ratio of a methyl group of the polydimethylsiloxane.

<Quantification Method for Chain Length of Polydimethylsiloxane>

$^{1}$H-NMR Measurement Conditions
NMR apparatus: ECA500 manufactured by JEOL Resonance Co., Ltd.
Probe: 50TH5AT/FG2
Observed range: -5 to 15 ppm
Observation center: 5 ppm
Pulse repetition time: 9 sec
Pulse width: 45°
NMR sample tube: 5 φ
Sample amount: 45 to 55 mg
Solvent: deuterochloroform
Measurement temperature: room temperature
Cumulative number: 256 times
In the Case of Allylphenol-terminated Polydimethylsiloxane

A: an integrated value of a methyl group in a dimethylsiloxane moiety observed around δ -0.02 to δ 0.5
B: an integrated value of a methylene group at a benzyl position in allylphenol observed around δ 2.50 to δ 2.75

$$\text{Chain length of polydimethylsiloxane} = (A/6)/(B/4)$$

<Quantification Method for Content of Polydimethylsiloxane in PC-PDMS>

e.g.) The quantification was performed by a quantification method for the copolymerization amount of a polydimethylsiloxane in a p-t-butylphenol (PTBP)-terminated polycarbonate obtained by copolymerizing an allylphenol-terminated polydimethylsiloxane.

NMR apparatus: ECA-500 manufactured by JEOL Resonance Co., Ltd.
Probe: TH5 corresponding to 5 φ NMR sample tube
Observed range: -5 to 15 ppm
Observation center: 5 ppm
Pulse repetition time: 9 sec
Pulse width: 45°
Cumulative number: 256 times
NMR sample tube: 5 φ
Solvent: deuterochloroform
Measurement temperature: room temperature

A: an integrated value of a methyl group in a BPA moiety observed around δ 1.5 to δ 1.9
B: an integrated value of a methyl group in a dimethylsiloxane moiety observed around δ -0.02 to δ 0.3
C: an integrated value of a butyl group in a p-tert-butylphenyl moiety observed around δ 1.2 to δ 1.4

$$a = A/6$$

$$b = B/6$$

$$c = C/9$$

$$T = a + b + c$$

$$f = a/T \times 100$$

$$g = b/T \times 100$$

$$h = c/T \times 100$$

$$TW = f \times 254 + g \times 74.1 + h \times 149$$

$$PDMS\ (wt\%) = g \times 74.1/TW \times 100$$

(3) Viscosity-average Molecular Weight of

Polycarbonate-polyorganosiloxane Copolymer

A viscosity-average molecular weight (Mv) was calculated from the following equation (Schnell's equation) by using a limiting viscosity [η] determined through the measurement of the viscosity of a methylene chloride solution (concentration unit: g/L) at 20°C with an Ubbelohde-type viscometer.

$$[\eta] = 1.23 \times 10^{-5} \times Mv^{0.83}$$

<Production of Polycarbonate Oligomer>

To 5.6 mass% aqueous sodium hydroxide, 2,000 ppm of sodium dithionite with respect to bisphenol A (BPA) (to be dissolved later) was added. BPA was dissolved in the solution so that the concentration of BPA became 13.5 mass%. Thus, a solution of BPA in aqueous sodium hydroxide was prepared. The solution of BPA in aqueous sodium hydroxide, methylene chloride, and phosgene were continuously passed through a tubular reactor having an inner diameter of 6 mm and a tube length of 30 m at flow rates of 40 L/hr, 15 L/hr, and 4.0 kg/hr, respectively. The tubular reactor had a jacket portion and the temperature of a reaction liquid was kept at 40°C or less by passing cooling water through the jacket. The reaction liquid that had exited the tubular reactor was continuously introduced into a baffled vessel-type reactor having an internal volume of 40 L provided with a sweptback blade, and then the solution of BPA in aqueous sodium hydroxide, 25 mass% aqueous sodium hydroxide, water, and a 1 mass% aqueous solution of triethylamine were further added to the reactor at flow rates of 2.8 L/hr, 0.07 L/hr, 17 L/hr, and 0.64 L/hr, respectively, to thereby perform a reaction. The reaction liquid flowing out of the vessel-type reactor was continuously taken out, and then an aqueous phase was separated and removed by leaving the liquid at rest, followed by the collection of a methylene chloride phase.
The concentration of the polycarbonate oligomer thus obtained was 330 g/L and the concentration of a chloroformate group thereof was 0.71 mol/L.

<Production of PC-POS Copolymer (A)>

Production Example 1 (Production of PC-POS Copolymer A-1)

13.5 L of the polycarbonate oligomer solution produced as described above, 11.4 L of methylene chloride, a solution obtained by dissolving 350 g of an allylphenol terminal-modified polydimethylsiloxane (a polydimethylsiloxane is hereinafter sometimes referred to as "PDMS") having an average chain length n of 51, a log(M) at which dw/dlog(M) became the maximum value of 3.7, and a ratio of a value obtained by integrating the dw/dlog (M) value over the log (M) range of from 4.00 to 4.50 to a value obtained by integrating the dw/dlog(M) value over the entire range of the log(M) (hereinafter, in Examples, the ratio is sometimes referred to as "ratio of a log(M) of 4.00 to 4.50") of 15.0% in 800 ml of methylene chloride, and 7.9 mL of triethylamine were loaded into a 50-liter vessel-type reactor including a baffle board, a paddle-type stirring blade, and a cooling jacket. 1,284 g of 6.4 mass% aqueous sodium hydroxide was added to the mixture under stirring, and a reaction between the polycarbonate oligomer and the allylphenol terminal-modified PDMS was performed for 20 minutes. The allylphenol terminal-modified PDMS used here is obtained by blending, at a mass ratio of 5:5, an allylphenol terminal-modified PDMS having an average chain length n of 34, a log(M) at which dw/dlog (M) becomes the maximum value of 3.6, and a ratio of a log(M) of from 4.00 to 4.50 of 5.6%, and an allylphenol terminal-modified PDMS having an average chain length n of 92, a log(M) at which dw/dlog(M) becomes the maximum value of 4.1, and a ratio of a log(M) of from 4.00 to 4.50 of 34.8%.

A solution of p-t-butylphenol (PTBP) in methylene chloride (prepared by dissolving 128.1 g of PTBP in 1.3 L of methylene chloride) and a solution of BPA in aqueous sodium hydroxide (prepared by dissolving 997 g of BPA in an aqueous solution prepared by dissolving 567 g of NaOH and 1.9 g of sodium dithionite in 8.3 L of water) were added to the polymerization liquid, and the mixture was subjected to a polymerization reaction for 40 minutes.

10 L of methylene chloride was added to the resultant for dilution, and the mixture was stirred for 20 minutes. After that, the mixture was separated into an organic phase containing a PC-PDMS, and an aqueous phase containing excess amounts of BPA and NaOH, and the organic phase was isolated.

A solution of the PC-PDMS in methylene chloride thus obtained was sequentially washed with 0.03 mol/L aqueous NaOH and 0.2 N hydrochloric acid in amounts of 15 vol% each with respect to the solution. Next, the solution was repeatedly washed with pure water until an electric conductivity in an aqueous phase after the washing became 0.01 μS/m or less.

A solution of the polycarbonate in methylene chloride obtained by the washing was concentrated and pulverized, and the resultant flake was dried under reduced pressure at 120°C. The flake had a PDMS concentration of 6.0 mass%, a viscosity number measured in conformity with ISO 1628-4 (1999) of 47.7, and a viscosity-average molecular weight Mv of 17,800. Thus, a PC-POS copolymer A-1 was obtained as the PC-PDMS.

Here, the GPC measurement of the polyorganosiloxane block (A-2) in the resultant PC-POS copolymer A-1 was performed. As a result, the block had an average chain length n of 51, a log(M) at which dw/dlog (M) became the maximum value of 3.7, and a ratio of a log (M) of 4.00 to 4.50 of 15.0%.

<Production of PC-POS Copolymer except PC-POS Copolymer (A)>

Production Example 2 (Production of PC-POS Copolymer A-2)

A flake of a PC-POS copolymer A-2 was obtained in the same manner as in Production Example 1 except that: the allylphenol terminal-modified PDMS used in Production Example 1 was changed to 350 g of an allylphenol terminal-modified PDMS having an average chain length n of 92, a log (M) at which dw/dlog (M) took the maximum value of 4.1, and a ratio of a log(M) of 4.00 to 4.50 of 34.8%; and the amount of methylene chloride to be added to the polycarbonate oligomer solution was changed to 6.7 L. The resultant flake had a PDMS amount of 6.0 mass%, a viscosity number measured in conformity with ISO 1628-4 (1999) of 47.4, and a viscosity-average molecular weight of 17,700.

<Aromatic Polycarbonate Resin>

· FN3000A: "TARFLON FN3000A (product name) ", manufactured by Idemitsu Kosan Co., Ltd., bisphenol A homopolycarbonate, viscosity-average molecular weight (Mv) = 29,500
· FN2600A: "TARFLON FN2600A (product name)", manufactured by Idemitsu Kosan Co., Ltd., bisphenol A homopolycarbonate, viscosity-average molecular weight (Mv) = 25,400
· FN2500A: "TARFLON FN2500A (product name) ", manufactured by Idemitsu Kosan Co., Ltd., bisphenol A homopolycarbonate, viscosity-average molecular weight (Mv) = 23,500
· FN2200A: "TARFLON FN2200A (product name) ", manufactured by Idemitsu Kosan Co., Ltd., bisphenol A homopolycarbonate, viscosity-average molecular weight (Mv) = 21,300

· FN1900A: "TARFLON FN1900A (product name) ", manufactured by Idemitsu Kosan Co., Ltd., bisphenol A homopolycarbonate, viscosity-average molecular weight (Mv) = 19,300
· FN1700A: "TARFLON FN1700A (product name) ", manufactured by Idemitsu Kosan Co., Ltd., bisphenol A homopolycarbonate, viscosity-average molecular weight (Mv) = 17,700

<Styrene-based Resin (B)>

· AT-05: "SANTAC AT-05 (product name)", manufactured by Nippon A&L Inc.

<Flame Retardant (C)>

· F114: "MEGAFACE F114 (product name) ", potassium perfluorobutane sulfonate, manufactured by DIC Corporation
· Si-476: "Si-476 (product name)", mixture of silsesquioxane and sodium *p*-toluenesulfonate having a mass ratio of 60/40, manufactured by Double bond Chem. Ind., Co., Ltd.
· PX-200: "PX-200 (product name) ", aromatic condensed phosphoric acid ester, manufactured by Daihachi Chemical Industry Co., Ltd.

<Flame Retardant Aid (D)>

· Polytetrafluoroethylene (PTFE): "CD097E (product name)", polytetrafluoroethylene: 100%, manufactured by Asahi Glass Co., Ltd.

· Polytetrafluoroethylene (PTFE): "A3800 (product name)", polytetrafluoroethylene: 50%, polyalkyl (meth)acrylate having an alkyl group having 4 or more carbon atoms: 50%, manufactured by Mitsubishi Rayon Co., Ltd.

<Inorganic Filler (E)>

· Glass fibers: "FT737 (product name) ", chopped strand of glass fibers (average fiber diameter: 13 μm, average fiber length: 4 mm) treated with a bundling agent containing a urethane-based resin, manufactured by Owens Corning Corporation
· Glass fibers: "415A (product name) ", chopped strand of glass fibers (average fiber diameter: 14 μm, average fiber length: 4 mm) treated with a bundling agent containing a polyolefin-based resin, manufactured by Owens Corning Corporation
· Titanium oxide: "CR-63 (product name) ", manufactured by Ishihara Sangyo Kaisha, Ltd.

<Other Additive>

· Antioxidant: "IRGAFOS 168 (product name)", tris(2,4-di-t-butylphenyl) phosphite, manufactured by BASF Japan Ltd.
· Antioxidant: "IRGAFOS 1076 (product name)", n-octadecyl-3-(3',5'-di-t-butyl-4'-hydroxyphenyl)propionate, manufactured by BASF Japan Ltd.
· Release agent: "EW440A (product name)", pentaerythritol tetrastearate, manufactured by Riken Vitamin Co., Ltd.
· Silicone: "BY16-161 (product name)", siloxane containing a methoxysilyl group in which a methoxy group is bonded to a silicon atom through a divalent hydrocarbon group, manufactured by Dow Corning Toray Co., Ltd.

Examples 1 to 13, Comparative Examples 1 to 16, and Reference Examples 1 to 11

Any one of the PC-POS copolymers obtained in Production Examples 1 and 2, and other respective components

were mixed at a blending ratio (unit; part (s) by mass) shown in Table 1 to Table 4, and the mixture was supplied to a vented twin-screw extruder (manufactured by Toshiba Machine Co., Ltd., TEM-35B) and melt-kneaded at a screw revolution number of 150 rpm, an ejection amount of 20 kg/hr, and a resin temperature of from 295°C to 300°C to provide an evaluation pellet sample. The evaluation pellet sample was dried at 120°C for 8 hours, and was then subjected to injection molding with an injection molding machine (manufactured by Nissei Plastic Industrial Co., Ltd., NEX110, screw diameter: 36 mmΦ) at a cylinder temperature of 280°C and a die temperature of 80°C to produce Izod test pieces (two Izod test pieces each measuring 63 mm × 13 mm × 3.2 mm) . Further, the dried evaluation pellet sample was molded with an injection molding machine (manufactured by Niigata Machine Techno Co., Ltd., MD50XB, screw diameter: 30 mmΦ) at a cylinder temperature of 280°C and a die temperature of 80°C to produce a three-stage plate for a weatherability evaluation (90 mm×50 mm, 3 mm-thick portion: 45 mm×50 mm, 2 mm-thick portion: 22.5 mm×50 mm, 1 mm-thick portion: 22.5 mm×50 mm). The results of evaluation tests are shown in Table 1 and Table 2.

[Evaluation Test]

<Total Light Transmittance (Tt)>

The total light transmittance of the 3 mm-thick portion of the three-stage plate was measured on the basis of ISO 13468 three times, and the average of the measured values was determined.

<Q Value (Flow Value) [Unit; $10^{-2}$ mL/sec]>

The amount (×$10^{-2}$ mL/sec) of a molten resin flowing out of a nozzle having a diameter of 1 mm and a length of 10 mm was measured with a Koka flow tester in conformity with JIS K 7210 at 280°C under a pressure of 15.7 MPa.

<Izod Impact Strength>

Notched Izod impact strengths at measurement temperatures of 23°C and -40°C were measured by using a test piece, which had been obtained by making a notch in a test piece having a thickness of 3.2 mm (about 1/8 inch) produced with an injection molding machine through a post-treatment, in conformity with ASTM Standard D-256. Judgment criteria for the notched Izod impact strengths are as follows: a notched Izod impact strength at 23°C of 55 kJ/$m^2$ or more means that impact resistance at 23°C is excellent; and a notched Izod impact strength at -40°C of 40 kJ/$m^2$ or more means that impact resistance at low temperature is excellent.

<Flame Retardancy Evaluation>

A vertical flame test was performed by using test pieces having thicknesses of 1.0 mm, 1.5 mm, and 2.0 mm (length: 12.7 mm, width: 12.7 mm) in conformity with the Underwriters Laboratory Subject 94 (UL94) flame test, and the test pieces were evaluated by being classified into ranks "V-0", "V-1", and "V-2". A test piece classified into the rank "V-0" means that the test piece is excellent in flame retardancy.

<Tensile Break Strength (Unit; MPa)>

A tensile break strength was measured in conformity with a method disclosed in JIS K 7133.

<Bending Modulus (Unit; GPa)>

A bending modulus was measured in conformity with a method disclosed in JIS K 7133.

<Heat Deformation Temperature (Unit; °C)>

A heat deformation temperature was measured in conformity with a method disclosed in JIS K 7207.

<Haze Value>

The haze value of the 3 mm-thick portion of the three-stage plate was measured on the basis of ISO 14782 three times, and the average of the measured values was determined.

Table 1

| | | Reference Examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| PC (parts by mass) | A-1 | - | 100 | 60 | 40 | 30 | 20 | - | - | - | - | - |
| | A-2 | - | - | - | - | - | - | 100 | 60 | 40 | 30 | 20 |
| | FN1700A | 100 | - | 40 | 60 | 70 | 80 | - | 40 | 60 | 70 | 80 |
| Total light transmittance | %, 3 mm | 90 | 87 | 86 | 87 | 87 | 88 | 66 | 71 | 74 | 75 | 75 |
| Haze | %, 3 mm | 0.8 | 1.3 | 1.4 | 1.3 | 1.4 | 0.8 | 19 | 12.2 | 9.2 | 7.9 | 5.1 |

As can be seen from Table 1, in the case where the FN1700A having high transparency is mixed with the PC-POS copolymer A-2 having low transparency, even when the mixing ratio of the copolymer is low, the transparency of a PC resin to be finally obtained largely reduces. Meanwhile, the PC-POS copolymer A-1 has high transparency, and hence it is found that even when the copolymer is mixed with the FN1700A similarly having high transparency, a reduction in transparency of a PC resin to be finally obtained is suppressed. The fact that high transparency can be maintained even when the mixing ratio of the copolymer A-1 with respect to the FN1700A is high finally means that a transition period can be shortened at the time of switching from the production of the copolymer to the production of the FN1700A in an actual production line.

Table 2

| | | | Examples | | | | Comparative Examples | | | | |
|---|---|---|---|---|---|---|---|---|---|---|---|
| | | | 1 | 2 | 3 | 4 | 1 | 2 | 3 | 4 | 5 |
| Resin composition (parts by mass) | PC | A-1 | 75 | 50 | 75 | 75 | - | - | - | - | - |
| | | A-2 | - | - | - | - | 75 | - | 50 | 75 | 25 |
| | | FN1900A | - | - | - | - | - | 75 | - | - | - |
| | ABS | AT-05 | 25 | 50 | 25 | 25 | 25 | 25 | 50 | 25 | 75 |
| Additive (parts by mass) | Antioxidant | IRAGAFOS 168 | 0.1 | 0.1 | 0.1 | 0.1 | 0.1 | 0.1 | 0.1 | 0.1 | - |
| | | IRAGAFOS 1076 | 0.1 | 0.1 | 0.1 | 0.1 | 0.1 | 0.1 | 0.1 | 0.1 | - |
| | Release agent | EW440A | 0.5 | 0.5 | 0.5 | 0.5 | 0.5 | 0.5 | 0.5 | 0.5 | - |
| | Titanium oxide | CR-63 | - | - | 2.0 | 4.0 | - | - | - | 2.0 | - |
| | Silicone | BY16-161 | - | - | 0.1 | 0.1 | - | - | - | 0.1 | - |
| Performance evaluation | Q value | $10^{-2}$ mL/sec | 71 | 81 | 72 | 72 | 71 | 73 | 81 | 71 | 83 |
| | IZOD impact strength (23°C) | kJ/m$^2$ | 62 | 62 | 50 | 50 | 66 | 56 | 67 | 61 | 16 |
| | IZOD impact strength (-40°C) | kJ/m$^2$ | 45 | 20 | 30 | 30 | 46 | 17 | 20 | 35 | 8 |

Table 3

| | | | Examples | | | | Comparative Examples | | | | | |
|---|---|---|---|---|---|---|---|---|---|---|---|---|
| | | | 5 | 6 | 7 | 8 | 6 | 7 | 8 | 9 | 10 | 11 |
| Resin composition (parts by mass) | PC | A-1 | 86 | 67 | 86 | 86 | 100 | - | - | - | - | - |
| | | A-2 | - | - | - | - | - | 100 | 86 | 67 | 86 | 86 |
| | | FN3000A | - | 15 | - | - | - | - | - | 15 | - | - |
| | | FN2600A | 14 | - | 14 | 14 | - | - | 14 | - | 14 | 14 |
| | | FN2500A | - | 13 | - | - | - | - | - | 13 | - | - |
| Additive (parts by mass) | Flame retardant | F114 | 0.03 | - | - | - | - | - | 0.03 | - | - | - |
| | | Si-476 | - | 0.2 | - | - | - | - | - | 0.2 | - | - |
| | | PX-200 | - | - | 3 | 5 | - | - | - | - | 3 | 5 |
| | PTFE | CD097E | - | 0.2 | - | - | - | - | - | 0.2 | - | - |
| | | A3800 | 0.5 | - | 0.3 | 0.3 | - | - | 0.5 | - | 0.3 | 0.3 |
| | Antioxidant | IRAGAFOS 168 | 0.1 | 0.1 | 0.1 | 0.1 | 0.1 | 0.1 | 0.1 | 0.1 | 0.1 | 0.1 |
| Performance evaluation | Total light transmittance | %, 3 mm | - | - | - | - | 87 | 66 | - | - | - | - |
| | IZOD impact strength (23°C) | $kJ/m^2$ | 87 | 76 | 82 | 80 | 70 | 72 | 86 | 76 | 82 | 80 |
| | IZOD impact strength (-40°C) | $kJ/m^2$ | 58 | 43 | 40 | 20 | 57 | 57 | 63 | 46 | 48 | 23 |
| | UL94 flame test | | V-0 (1.5 mm) | V-0 (1.0 mm) | V-0 (1.0 mm) | V-0 (1.0 mm) | V-2 (2.0 mm) | V-2 (2.0 mm) | V-0 (1.5 mm) | V-0 (1.0 mm) | V-0 (1.0 mm) | V-0 (1.0 mm) |

Table 4

| | | | Examples | | | | | Comparative Examples | | | | |
|---|---|---|---|---|---|---|---|---|---|---|---|---|
| | | | 9 | 10 | 11 | 12 | 13 | 12 | 13 | 14 | 15 | 16 |
| Resin composition (parts by mass) | PC | A-1 | 40 | 64 | 56 | 26 | 54 | - | - | - | - | - |
| | | A-2 | - | - | - | - | - | - | 81 | - | - | - |
| | | FN1700A | 41 | - | - | - | - | 81 | - | 64 | 56 | - |
| | | FN2200A | 9 | 16 | 14 | 38 | - | 9 | 9 | 16 | 14 | 95 |
| | | FN2500A | - | - | - | 31 | - | - | - | - | - | - |
| | | FN2600A | - | - | - | - | 10 | - | - | - | - | - |
| | | FN3000A | - | - | - | - | 31 | - | - | - | - | - |
| Additive (parts by mass) | Glass fibers | FT737 | 10 | 20 | 30 | 5 | - | 10 | 10 | 20 | 30 | 5 |
| | | 415A | - | - | - | - | 5 | - | - | - | - | - |
| | Antioxidant | IRAGAFOS 168 | 0.1 | 0.1 | 0.1 | 0.1 | 0.1 | 0.1 | 0.1 | 0.1 | 0.1 | 0.1 |
| | PDMS content (in resin) | mass% | 3 | 4.8 | 4.8 | 1.5 | 3.4 | 0 | 5.4 | 0 | 0 | 0 |

(continued)

| | | | Examples | | | | | Comparative Examples | | | | |
|---|---|---|---|---|---|---|---|---|---|---|---|---|
| | | | 9 | 10 | 11 | 12 | 13 | 12 | 13 | 14 | 15 | 16 |
| Performance evaluation | Q value | $10^{-2}$ mL/sec | 6 | 6 | 5 | 7 | 4 | 5 | 6 | 6 | 4 | 8 |
| | Tensile break strength | MPa | 86 | 105 | 130 | 56 | 45 | 85 | 83 | 110 | 130 | 53 |
| | Bending modulus | GPa | 3.6 | 5.4 | 7.9 | 2.8 | 2.8 | 3.7 | 3.6 | 5.6 | 7.5 | 2.8 |
| | Heat deformation temperature | °C | 144 | 144 | 144 | 140 | 138 | 146 | 144 | 147 | 146 | 141 |
| | IZOD impact strength (-40°C) | kJ/$m^2$ | 19 | 18 | 19 | 24 | 45 | 12 | 22 | 14 | 14 | 11 |

INDUSTRIAL APPLICABILITY

The polycarbonate-based resin composition obtained in the present invention can be suitably used in parts for electrical and electronic equipment, parts for the interior and exterior of lighting equipment, parts for the interior and exterior of a vehicle, food trays, and eating utensils because the composition is excellent in molding external appearance and impact resistance.

## Claims

**1.** A method of producing a polycarbonate-based resin composition, comprising

using a polycarbonate-based resin containing a polycarbonate- polyorganosiloxane copolymer (A) as a raw material, and
the step of incorporating at least one of a styrene-based resin (B), a flame retardant (C), a flame retardant aid (D), and an inorganic filler (E) into the resin, wherein
the copolymer having a polycarbonate block (A-1) formed of a repeating unit represented by the following general formula (I) and a polyorganosiloxane block (A-2) containing a repeating unit represented by the following general formula (II), and
the copolymer using, as a raw material, a polyorganosiloxane which is obtained by blending a plurality of polyorganosiloxanes, the blend having the following features: in a differential molecular weight distribution curve obtained from measurement by gel permeation chromatography using the polystyrene calibration curve, the curve having the axis of abscissa indicating a logarithmic value log (M) of a molecular weight M and the axis of ordinate indicating dw/dlog(M) obtained by differentiating a concentration fraction w with respect to the logarithmic value log(M) of the molecular weight,

(1) a dw/dlog(M) value becomes maximum in the range of $3.4 \leq \log(M) \leq 4.0$, and
(2) a ratio of a value obtained by integrating the dw/dlog (M) value over the range of $4.00 \leq \log(M) \leq 4.50$ to a value obtained by integrating the dw/dlog (M) value over the entire range of the log (M) in the differential molecular weight distribution curve is 6 to 40%,

wherein the dw/dlog (M) value is determined as defined in the description:

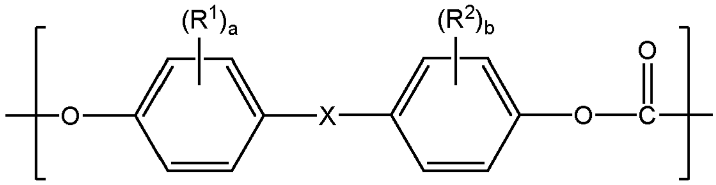

(I)

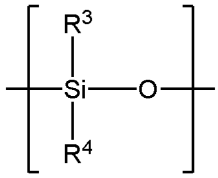

(II)

wherein $R^1$ and $R^2$ each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, $-SO_2-$, -O-, or -CO-, $R^3$ and $R^4$ each independently represent a hydrogen atom, a halogen atom, an alkyl group having 1 to 6 carbon atoms, an alkoxy group having 1 to 6 carbon atoms, or an aryl group having 6 to 12 carbon atoms, and a and b each independently represent an integer of 0 to 4,
wherein the flame retardant (C) comprises at least one selected from an organic alkali metal salt, an organic alkaline earth metal salt, a silicone-based flame retardant, and a phosphorus-based flame retardant.

**2.** The method of producing a polycarbonate-based resin composition according to claim 1, wherein the polyorganosiloxane block (A-2) has an average chain length of 30 to 85 as calculated by nuclear magnetic resonance measurement.

**3.** The method of producing a polycarbonate-based resin composition according to claim 1 or 2, wherein a content of the polyorganosiloxane block (A-2) is 0.5 to 20.0 mass% of the polycarbonate-based resin containing the polycarbonate-polyorganosiloxane copolymer (A) as calculated by nuclear magnetic resonance measurement.

**4.** The method of producing a polycarbonate-based resin composition according to any one of claims 1 to **3,** wherein the polycarbonate-based resin containing the polycarbonate-polyorganosiloxane copolymer (A) has a viscosity-average molecular weight Mv of 14,000 to 22,000 calculated from Schnell's equation $[\eta] = 1.23 \times 10^{-5} \times Mv^{0.83}$ by measuring the limiting viscosity $[\eta]$ of a methylene chloride solution with a concentration unit: g/L at 20°C.

**5.** The method of producing a polycarbonate-based resin composition according to any one of claims 1 to 4, wherein in the general formula (I), a and b each represent 0, and X represents an alkylidene group having 3 carbon atoms.

**6.** The method of producing a polycarbonate-based resin composition according to any one of claims 1 to 5, wherein in the general formula (II), $R^3$ and $R^4$ each represent a methyl group.

**7.** The method of producing a polycarbonate-based resin composition according to any one of claims 1 to 6, wherein the styrene-based resin (B) has constituent units derived from acrylonitrile and styrene.

**8.** The method of producing a polycarbonate-based resin composition according to any one of claims 1 to 7, wherein the flame retardant (C) comprises any one of an organic alkali metal salt, an organic alkaline earth metal salt, a silicone-based flame retardant, and a phosphorus-based flame retardant.

**9.** The method of producing a polycarbonate-based resin composition according to any one of claims 1 to 8, wherein a content of the flame retardant (C) is 0.01 to 10 parts by mass with respect to 100 parts by mass of a total amount of the polycarbonate-based resin containing the polycarbonate-polyorganosiloxane copolymer (A) and the styrene-based resin (B).

**10.** The method of producing a polycarbonate-based resin composition according to any one of claims 1 to 9, wherein a content of the flame retardant (C) is 0.1 to 1 part by mass with respect to 100 parts by mass of a total amount of the

polycarbonate-based resin containing the polycarbonate-polyorganosiloxane copolymer (A) and the styrene-based resin (B).

11. The method of producing a polycarbonate-based resin composition according to any one of claims 1 to 10, wherein a content of the flame retardant (C) is from 0.1 part by mass to 0.5 part by mass with respect to 100 parts by mass of a total amount of the polycarbonate-based resin containing the polycarbonate-polyorganosiloxane copolymer (A) and the styrene-based resin (B).

12. The method of producing a polycarbonate-based resin composition according to any one of claims 1 to 11, wherein the flame retardant aid (D) comprises a polytetrafluoroethylene.

13. The method of producing a polycarbonate-based resin composition according to any one of claims 1 to 12, wherein the inorganic filler (E) comprises glass fibers.

**Patentansprüche**

1. Verfahren zur Herstellung einer Harzzusammensetzung auf Polycarbonatbasis, umfassend

die Verwendung eines Harzes auf Polycarbonatbasis, das ein Polycarbonat-Polyorganosiloxan-Copolymer (A) enthält, als ein Ausgangsmaterial und
den Schritt des Einarbeitens von mindestens einem von einem Harz auf Styrolbasis (B), einem Flammschutzmittel (C), einem Flammschutzhilfsmittel (D) und einem anorganischen Füllstoff (E) in das Harz, wobei
das Copolymer einen Polycarbonatblock (A-1), der aus einer durch die folgende allgemeine Formel (I) dargestellten Wiederholungseinheit gebildet ist, und einen Polyorganosiloxanblock (A-2), der eine durch die folgende allgemeine Formel (II) dargestellte Wiederholungseinheit enthält, aufweist und
das Copolymer als ein Ausgangsmaterial ein Polyorganosiloxan verwendet, das durch Mischen einer Vielzahl von Polyorganosiloxanen erhalten wird, wobei die Mischung die folgenden Merkmale aufweist: in einer differentiellen Molekulargewichtsverteilungskurve, die aus einer Messung durch Gelpermeationschromatographie unter Verwendung der Polystyrol-Kalibrierungskurve erhalten wird, wobei die Abszissenachse aufweist der Kurve einen logarithmischen Wert log(M) eines Molekulargewichts M angibt und die Koordinatenachse dw/dlog(M), erhalten durch Differenzieren eines Konzentrationsanteils w in Bezug auf den logarithmischen Wert log(M) des Molekulargewichts, angibt,

(1) wird ein dw/dlog(M)-Wert maximal in dem Bereich von $3{,}4 \leq \log(M) \leq 4{,}0$ und
(2) beträgt ein Verhältnis eines Werts, der durch Integrieren des dw/dlog(M)-Werts über den Bereich von $4{,}00 \leq \log(M) \leq 4{,}50$ erhalten wird, zu einem Wert, der durch Integrieren des dw/dlog(M)-Werts über den gesamten Bereich von log(M) in der differentiellen Molekulargewichtsverteilungskurve erhalten wird, 6 bis 40 %,

wobei der dw/dlog(M)-Wert wie in der Beschreibung bestimmt wird:

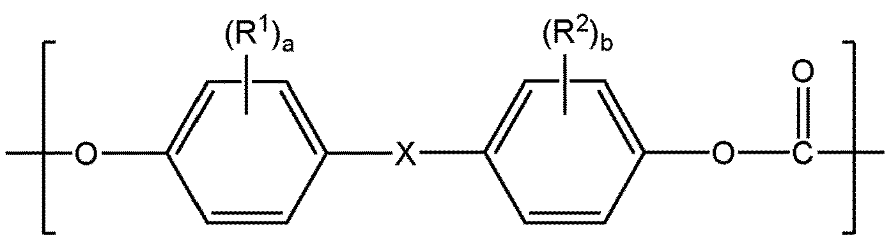

(I)

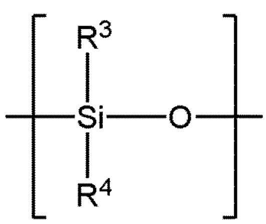

(II)

worin $R^1$ und $R^2$ jeweils unabhängig ein Halogenatom, eine Alkylgruppe mit 1 bis 6 Kohlenstoffatomen oder eine Alkoxygruppe mit 1 bis 6 Kohlenstoffatomen darstellen, X eine Einfachbindung, eine Alkylengruppe mit 1 bis 8 Kohlenstoffatomen, eine Alkylidengruppe mit 2 bis 8 Kohlenstoffatomen, eine Cycloalkylengruppe mit 5 bis 15 Kohlenstoffatomen, eine Cycloalkylidengruppe mit 5 bis 15 Kohlenstoffatomen, eine Fluorendiylgruppe, eine Arylalkylgruppe mit 7 bis 15 Kohlenstoffatomen, eine Arylalkylidengruppe mit 7 bis 15 Kohlenstoffatomen, -S-, -SO-, -$SO_2$-, -O- oder -COdarstellt, $R^3$ und $R^4$ jeweils unabhängig ein Wasserstoffatom, ein Halogenatom, eine Alkylgruppe mit 1 bis 6 Kohlenstoffatomen, eine Alkoxygruppe mit 1 bis 6 Kohlenstoffatomen oder eine Arylgruppe mit 6 bis 12 Kohlenstoffatomen darstellen und a und b jeweils unabhängig eine ganze Zahl von 0 bis 4 darstellen,
wobei das Flammschutzmittel (C) mindestens eines, ausgewählt aus einem organischen Alkalimetallsalz, einem organischen Erdalkalimetallsalz, einem Flammschutzmittel auf Silikonbasis und einem Flammschutzmittel auf Phosphorbasis umfasst.

2. Verfahren zur Herstellung einer Harzzusammensetzung auf Polycarbonatbasis gemäß Anspruch 1, wobei der Polyorganosiloxanblock (A-2) eine durchschnittliche Kettenlänge von 30 bis 85, berechnet durch kernmagnetische Resonanzmessung, aufweist.

3. Verfahren zur Herstellung einer Harzzusammensetzung auf Polycarbonatbasis gemäß Anspruch 1 oder 2, wobei ein Gehalt des Polyorganosiloxanblocks (A-2) 0,5 bis 20,0 Masse-% des Harzes auf Polycarbonatbasis, das das Polycarbonat-Polyorganosiloxan-Copolymer (A) enthält, berechnet durch kernmagnetische Resonanzmessung, beträgt.

4. Verfahren zur Herstellung einer Harzzusammensetzung auf Polycarbonatbasis gemäß einem der Ansprüche 1 bis 3, wobei das Harz auf Polycarbonatbasis, das das Polycarbonat-Polyorganosiloxan-Copolymer (A) enthält, ein viskositätsmittleres Molekulargewicht Mv von 14.000 bis 22.000, berechnet aus der Schnell-Gleichung $[\eta] = 1,23 \times 10^{-5} \times Mv^{0,83}$ durch Messung der Grenzviskosität $[\eta]$ einer Methylenchloridlösung mit einer Konzentrationseinheit: g/L bei 20°C, aufweist.

5. Verfahren zur Herstellung einer Harzzusammensetzung auf Polycarbonatbasis gemäß einem der Ansprüche 1 bis 4, wobei in der allgemeinen Formel (I) a und b jeweils 0 darstellen und X eine Alkylidengruppe mit 3 Kohlenstoffatomen darstellt.

6. Verfahren zur Herstellung einer Harzzusammensetzung auf Polycarbonatbasis gemäß einem der Ansprüche 1 bis 5, wobei in der allgemeinen Formel (II) $R^3$ und $R^4$ jeweils eine Methylgruppe darstellen.

7. Verfahren zur Herstellung einer Harzzusammensetzung auf Polycarbonatbasis gemäß einem der Ansprüche 1 bis 6, wobei das Harz auf Styrolbasis (B) von Acrylnitril und Styrol abgeleitete konstitutionelle Einheiten aufweist.

8. Verfahren zur Herstellung einer Harzzusammensetzung auf Polycarbonatbasis gemäß einem der Ansprüche 1 bis 7, wobei das Flammschutzmittel (C) eines von einem organischen Alkalimetallsalz, einem organischen Erdalkalimetallsalz, einem Flammschutzmittel auf Silikonbasis und einem Flammschutzmittel auf Phosphorbasis umfasst.

9. Verfahren zur Herstellung einer Harzzusammensetzung auf Polycarbonatbasis gemäß einem der Ansprüche 1 bis 8, wobei ein Gehalt des Flammschutzmittels (C) 0,01 bis 10 Masseteile in Bezug auf 100 Masseteile einer Gesamtmenge des Harzes auf Polycarbonatbasis, das das Polycarbonat-Polyorganosiloxan-Copolymer (A) enthält, und des Harzes auf Styrolbasis (B) beträgt.

10. Verfahren zur Herstellung einer Harzzusammensetzung auf Polycarbonatbasis gemäß einem der Ansprüche 1 bis 9, wobei ein Gehalt des Flammschutzmittels (C) 0,1 bis 1 Masseteile in Bezug auf 100 Masseteile einer Gesamtmenge des Harzes auf Polycarbonatbasis, das das Polycarbonat-Polyorganosiloxan-Copolymer (A) enthält, und des Harzes auf Styrolbasis (B) beträgt.

11. Verfahren zur Herstellung einer Harzzusammensetzung auf Polycarbonatbasis gemäß einem der Ansprüche 1 bis 10, wobei ein Gehalt des Flammschutzmittels (C) 0,1 bis 0,5 Masseteile in Bezug auf 100 Masseteile einer Gesamtmenge des Harzes auf Polycarbonatbasis, das das Polycarbonat-Polyorganosiloxan-Copolymer (A) enthält, und des Harzes auf Styrolbasis (B) beträgt.

12. Verfahren zur Herstellung einer Harzzusammensetzung auf Polycarbonatbasis gemäß einem der Ansprüche 1 bis

11, wobei das Flammschutzhilfsmittel (D) ein Polytetrafluorethylen umfasst.

**13.** Verfahren zur Herstellung einer Harzzusammensetzung auf Polycarbonatbasis gemäß einem der Ansprüche 1 bis 12, wobei der anorganische Füllstoff (E) Glasfasern umfasst.

## Revendications

**1.** Procédé de production d'une composition de résine à base de polycarbonate, comprenant

l'utilisation d'une résine à base de polycarbonate contenant un copolymère (A) de polycarbonate-polyorganosiloxane comme matière première, et
l'étape d'incorporation dans la résine d'au moins l'un parmi une résine (B) à base de styrène, un retardateur (C) de flamme, un auxiliaire (D) retardateur de flamme et une charge inorganique (E), dans lequel
le copolymère ayant une séquence (A-1) de polycarbonate formée d'un motif répétitif représenté par la formule générale (I) suivante et une séquence (A-2) de polyorganosiloxane contenant un motif répétitif représenté par la formule générale (II) suivante, et
le copolymère utilisant, comme matière première, un polyorganosiloxane qui est obtenu en mélangeant une pluralité de polyorganosiloxanes, le mélange présentant les caractéristiques suivantes : dans une courbe de distribution différentielle du poids moléculaire obtenue à partir d'une mesure par chromatographie par perméation sur gel en utilisant la courbe d'étalonnage du polystyrène, la courbe ayant l'axe des abscisses indiquant une valeur logarithmique log(M) d'un poids moléculaire M et l'axe des ordonnées indiquant dw/dlog(M) obtenu par différenciation d'une fraction de concentration w par rapport à la valeur logarithmique log(M) du poids moléculaire,

(1) une valeur de dw/dlog(M) devient maximale dans la plage de $3,4 \leq \log(M) \leq 4,0$, et
(2) un rapport d'une valeur obtenue par intégration de la valeur de dw/dlog(M) sur la plage de $4,00 \leq \log(M) \leq 4,50$ par rapport à une valeur obtenue par intégration de la valeur de dw/dlog(M) sur toute la plage du log(M) dans la courbe de distribution différentielle du poids moléculaire est de 6 à 40 %,

dans lequel la valeur de dw/dlog(M) est déterminée telle que définie dans la description :

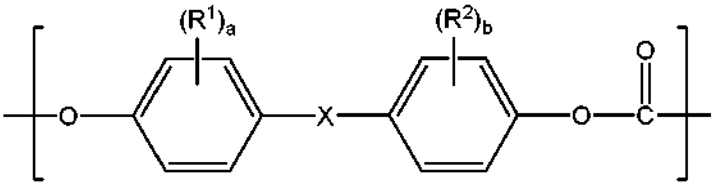
(I)

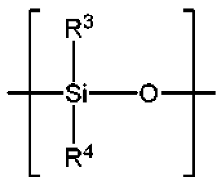
(II)

dans lequel $R^1$ et $R^2$ représentent chacun indépendamment un atome d'halogène, un groupe alkyle ayant 1 à 6 atomes de carbone, ou un groupe alcoxy ayant 1 à 6 atomes de carbone, X représente une liaison simple, un groupe alkylène ayant 1 à 8 atomes de carbone, un groupe alkylidène ayant 2 à 8 atomes de carbone, un groupe cycloalkylène ayant 5 à 15 atomes de carbone, un groupe cycloalkylidène ayant 5 à 15 atomes de carbone, un groupe fluorènediyle, un groupe arylalkylène ayant 7 à 15 atomes de carbone, un groupe arylalkylidène ayant 7 à 15 atomes de carbone, -S-, -SO-, $-SO_2-$, -O-, ou -CO-, $R^3$ et $R^4$ représentent chacun indépendamment un atome d'hydrogène, un atome d'halogène, un groupe alkyle ayant de 1 à 6 atomes de carbone, un groupe alcoxy ayant de 1 à 6 atomes de carbone, ou un groupe aryle ayant de 6 à 12 atomes de carbone, et a et b représentent chacun indépendamment un nombre entier de 0 à 4,
dans lequel le retardateur (C) de flamme comprend au moins l'un sélectionné parmi un sel organique de métal alcalin, un sel organique de métal alcalino-terreux, un retardateur de flamme à base de silicone et un retardateur de flamme à base de phosphore.

2. Procédé de production d'une composition de résine à base de polycarbonate selon la revendication 1, dans lequel la séquence (A-2) de polyorganosiloxane présente une longueur moyenne de chaîne de 30 à 85 telle que calculée par mesure par résonance magnétique nucléaire.

3. Procédé de production d'une composition de résine à base de polycarbonate selon la revendication 1 ou la revendication 2, dans lequel une teneur en séquence (A-2) de polyorganosiloxane est de 0,5 à 20,0 % en masse de la résine à base de polycarbonate contenant le copolymère (A) de polycarbonate-polyorganosiloxane telle que calculée par mesure par résonance magnétique nucléaire.

4. Procédé de production d'une composition de résine à base de polycarbonate selon l'une quelconque des revendications 1 à 3, dans lequel la résine à base de polycarbonate contenant le copolymère (A) de polycarbonate-polyorganosiloxane présente un poids moléculaire moyen en viscosité Mv de 14 000 à 22 000 calculé à partir de l'équation de Schnell $[\eta] = 1,23 \times 10^{-5} \times Mv^{0,83}$ en mesurant la viscosité limite $[\eta]$ d'une solution de chlorure de méthylène avec une unité de concentration : g/l à 20 °C.

5. Procédé de production d'une composition de résine à base de polycarbonate selon l'une quelconque des revendications 1 à 4, dans lequel, dans la formule générale (I), a et b représentent chacun 0, et X représente un groupe alkylidène ayant 3 atomes de carbone.

6. Procédé de production d'une composition de résine à base de polycarbonate selon l'une quelconque des revendications 1 à 5, dans lequel, dans la formule générale (II), $R^3$ et $R^4$ représentent chacun un groupe méthyle.

7. Procédé de production d'une composition de résine à base de polycarbonate selon l'une quelconque des revendications 1 à 6, dans lequel la résine (B) à base de styrène présente des motifs constitutifs dérivés de l'acrylonitrile et du styrène.

8. Procédé de production d'une composition de résine à base de polycarbonate selon l'une quelconque des revendications 1 à 7, dans lequel le retardateur (C) de flamme comprend l'un quelconque parmi un sel organique de métal alcalin, un sel organique de métal alcalino-terreux, un retardateur de flamme à base de silicone et un retardateur de flamme à base de phosphore.

9. Procédé de production d'une composition de résine à base de polycarbonate selon l'une quelconque des revendications 1 à 8, dans lequel une teneur en retardateur (C) de flamme est de 0,01 à 10 parties en masse par rapport à 100 parties en masse d'une quantité totale de la résine à base de polycarbonate contenant le copolymère (A) de polycarbonate-polyorganosiloxane et de la résine (B) à base de styrène.

10. Procédé de production d'une composition de résine à base de polycarbonate selon l'une quelconque des revendications 1 à 9, dans lequel une teneur en retardateur (C) de flamme est de 0,1 à 1 partie en masse par rapport à 100 parties en masse d'une quantité totale de la résine à base de polycarbonate contenant le copolymère (A) de polycarbonate-polyorganosiloxane et de la résine (B) à base de styrène.

11. Procédé de production d'une composition de résine à base de polycarbonate selon l'une quelconque des revendications 1 à 10, dans lequel une teneur en retardateur (C) de flamme est de 0,1 partie en masse à 0,5 partie en masse par rapport à 100 parties en masse d'une quantité totale de la résine à base de polycarbonate contenant le copolymère (A) de polycarbonate-polyorganosiloxane et de la résine (B) à base de styrène.

12. Procédé de production d'une composition de résine à base de polycarbonate selon l'une quelconque des revendications 1 à 11, dans lequel l'auxiliaire (D) retardateur de flamme comprend un polytétrafluoroéthylène.

13. Procédé de production d'une composition de résine à base de polycarbonate selon l'une quelconque des revendications 1 à 12, dans lequel la charge inorganique (E) comprend des fibres de verre.

FIG.1

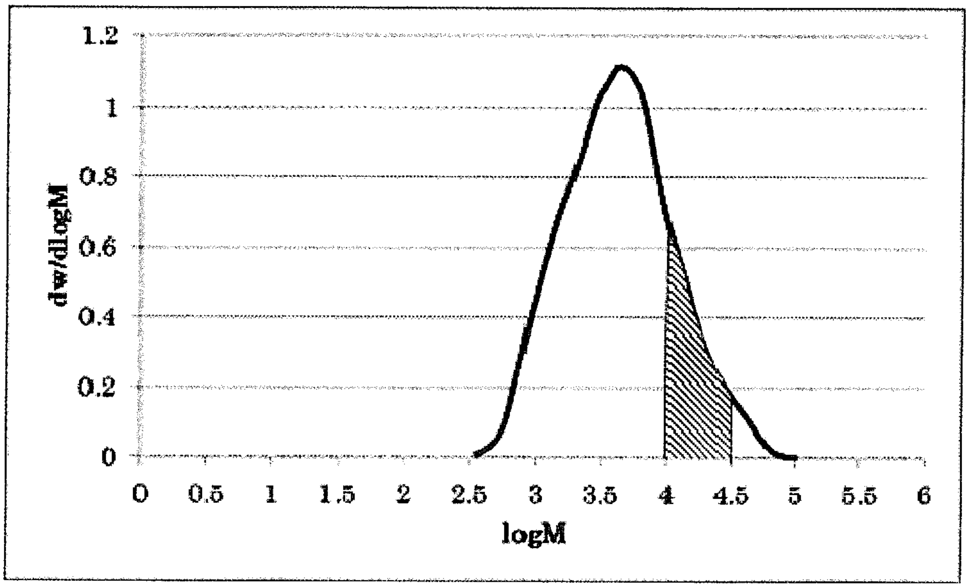

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2662310 B
- JP 2011021127 A
- JP 2012246430 A
- JP 8081620 A
- JP 2011046911 A
- JP 2006523243 A
- EP 2511321 A1
- WO 2011007673 A1
- US 20030027928 A1
- EP 1331246 A1
- EP 3081584 A1
- JP 2013523938 A
- JP 4225059 A
- JP 2006518803 A
- WO 2013115604 A1
- JP 11217390 A
- JP 2010241943 A